# EUROPEAN PATENT SPECIFICATION

(11) **EP 3 393 777 B1**
(45) Date of publication and mention of the grant of the patent: **09.12.2020**
(21) Application number: 16829122.7
(22) Date of filing: 20.12.2016
(51) Int. Cl.: B29D 30/06, B29C 73/18, B60C 5/14, B60C 19/12, B32B 1/00, B32B 3/26, B32B 5/02, B32B 7/08, B32B 7/12, B32B 25/04, B32B 27/06, B32B 27/08, B32B 27/16, B32B 27/20, B32B 27/22, B32B 27/30, B32B 27/32

(54) **SELF-SEALING TYRE FOR VEHICLE WHEELS**
SELBSTDICHTENDER REIFEN FÜR FAHRZEUGRÄDER
PNEU AUTO-OBTURANT POUR ROUES DE VÉHICULE

(30) Priority: 22.12.2015 IT UB20159519
(43) Date of publication of application: 31.10.2018
(73) Proprietor: Pirelli Tyre S.p.A., 20126 Milano (IT)
(72) Inventor: GIANNINI, Luca, 20126 Milano (IT); DONETTI, Raffaella, 20126 Milano (IT)
(74) Representative: PGA S.p.A.
(86) International application number: PCT/IB2016/057832
(87) International publication number: WO 2017/109701

(56) References cited:
- EP-A1- 1 435 301
- EP-A1- 2 045 102
- EP-A1- 2 535 279
- FR-A1- 2 886 581
- FR-A1- 2 917 996

## Description

The present invention relates to a self-sealing tyre for vehicle wheels.

Self-sealing tyres for vehicle wheels are capable of delaying or preventing air loss and subsequent deflation due to a perforation caused by a pointed object such as a nail.

### STATE OF THE ART

A self-sealing tyre comprises at least one sealing composition layer which can adhere to a pointed object that perforates the tyre. The sealing composition is made so as to be driven inside the hole when the pointed objected is expelled or removed, thus sealing the hole itself and preventing the outflow of air from the tyre. The sealing composition within the finished tyre (moulded and vulcanised), even if having a certain elasticity, is generally deformable and sticky.

In the process of manufacturing a self-sealing tyre, the sealing composition can be deposited in the radially more internal wall of the already-vulcanised tyre, as described for example in US4418093, or it can be applied during the assembly of the green tyre and vulcanised together with the other components, such as in WO2011064698 on behalf of the Applicant. In the second case, the sealing composition layer is said to be integrated in the tyre ("built-in").

In the first case, the sealing composition - once applied on the liner of the tyre with various techniques (e.g. by means of spraying or spreading and the like) - is not subjected to any vulcanisation process at the typical temperatures of 140-190°C but at most to low-temperature consolidation reactions (50-100°C) in order to confer the desired elasticity thereto.

In the case of the "built in", the sealing composition to be inserted in the green tyre can have fluidity and stickiness that are already quite high - in such case, it will only be consolidated during vulcanisation - or it could even be more rigid and compact than necessary for the final user, thus requiring a partial depolymerisation and fluidification in order to attain optimal sealing performances. Independent of the type of manufacturing process, in order to allow the handling and feeding of the green sealing composition, protection and support films have been introduced, on which the composition is deposited in a uniform layer. Such films, when they are arranged as radially more internal layer in the green tyre, facilitate the manufacturing of the tyre by preventing any undesired contact of the sealing composition with the operator, with the manipulation and assembly apparatuses and with the other components of the tyre. In addition, the films also perform an important function of support for the sealing composition, allowing the transportation and manipulation thereof on the plants. Such films are also defined self-supporting films.

The self-supporting protective film can be temporary and be removed at vulcanisation, as described for example in US2009/0084482, or permanent since it can remain in the final structure of the tyre, possibly able to contribute the sealing of the holes, as is considered for example in WO2011064698 on behalf of the Applicant.

The protective films used for such purpose in the field have varied nature and thickness.

US2009/0084482 describes a removable protective film made of polymer material, preferably of nylon or mixtures of nylon and rubber. The film, which according to this document must be made of materials that are not low-boiling, is generally removed after vulcanisation and hence is no longer present in the finished tyre.

The document US2004/194862 describes a self-sealing tyre obtained by arranging an elastomeric composition comprising poly-isobutylene and peroxides at an inner surface of a non-vulcanised tyre. The elastomeric composition is heated during the vulcanisation of the tyre, causing a reaction of decomposition of poly-isobutylene and the obtainment of a sealing elastomeric layer. The elastomeric composition in the finished tyre, in radially outer position, can be in direct contact with the liner, or not in contact therewith, while internally it can adhere to a sheet of rubber or to a sheet of thermoplastic material or to no sheet. In the case of sheet made of thermoplastic material, this can be constituted by only thermoplastic resins, or by mixtures thereof with elastomers. As possible thermoplastic resins, the following are listed: polyesters, nylons and polyolefins, used on their own or in mixtures thereof. The only exemplified thermoplastic resin is a nylon.

The document WO2011064698 describes self-sealing tyres which allow a selective sealing of the holes with diameter less than a predetermined value, obtained due to a particular sealing composite. Said composite comprises a permanent protective film made of polyamide or polyester - arranged at least at the crown zone of the tyre so as to be radially more internal in the tyre - and a sealing composition layer, placed directly on the protective film so as to be, in the tyre, in radially more external position with respect to the protective film.

The document US2012/0180923 relates to self-sealing tyres in which the sealing composite is applied to the green tyre before this is subjected to vulcanisation. The sealing composition layer is protected by a thermoplastic film constituted by a block polymer, comprising rigid (hard) blocks of polyamides and soft blocks of polyethers or copolymers of polyethers/polyesters (Pebax®).

The document US2012/0199260 describes a self-sealing tyre in which the sealing composite is applied to the green tyre before this is subjected to vulcanisation. The sealing composition layer is protected by a thermoplastic film, which can be either removable or permanent, comprising a fluoropolymer (FEP, ETFE, PTFE).

The document US2012/234449 describes a self-sealing tyre in which the sealing composite is applied to the green tyre before this is subjected to vulcanisation. The sealing composition layer is protected by a permanent film based on a chlorinated thermoplastic polymer (PVC, PVDC) and plasticiser agents with high molecular weight.

The document WO 2015/079384 on behalf of the Applicant describes a self-sealing tyre in which the sealing composite comprises a self-supporting elastomeric film comprising at least 50 % by weight with respect to the weight of the film itself of a thermoplastic elastomeric polyurethane (TPU), and a sealing composition layer associated with and supported by said self-supporting elastomeric film. Said self-supporting elastomeric film is radially inside the sealing composition layer and said sealing composition layer is placed substantially in contact with the liner.

The document US2010/0300593 describes a self-sealing tyre in which the sealing composition is extremely soft and can be supported by a thermoplastic film, based on polypropylene, polyethylene, polyvinylchloride or polyvinylidene chloride.

The document does not report any embodiment in which a self-supporting olefin film is applied to the green tyre and then vulcanised; rather, in para 100, it states that in the case of low-melting films, the application is conveniently made after vulcanisation. The only actual example reported in this patent (para 116) relates to a self-sealing tyre in which the sealing composite with polyethylene film is applied to the finished vulcanised tyre.

### SUMMARY OF THE INVENTION

The increasing request for self-sealing tyres has rendered an industrialization of the product opportune, and has placed new quality and control objectives aimed to provide self-sealing tyres that are more reliable, in particular regarding the detection of possible perforations and the performances of the sealing composite, especially at low temperatures.

For the optimisation of the production process and for the containment of the waste, the Applicant has also directed its attention towards improving the seal of the gasket between the ends of the sealing composite deposited on the building support (typically the building drum) and towards increasing the deformability of the sealing composite, in order to further increase the structural and size stability of green tyres (i.e. tyres to be sent to vulcanisation), reducing the tendency towards an elastic shrinkage of the composite and preventing possible tearing thereof during the drum expansion step.

In various documents relative to the specific field of the self-sealing tyres, widespread opinion holds that, if the sealing composite is applied to the green tyre before vulcanisation (built-in) and comprises a self-supporting film permanent, such film must have a melting temperature sufficiently high to resist the heating conditions employed during vulcanisation and moulding, which generally provide for temperatures slightly less than 200°C, typically between 140°C and 190°C. Melting temperatures of the material of the self-supporting film corresponding to or less than these could in fact lead to the partial melting thereof, with consequent alterations of the sealing composite and the function thereof, with possible contamination and damage of the vulcanisation chamber.

In addition, it is deemed that the materials applied within the cavity of tyres must have good properties, both thermal and mechanical, also in order to avoid being degraded and/or deformed during use on road, due to the combined action of the heat and stresses.

Indeed, during rolling, the components of the tyres are cyclically deformed, since they had to accompany the deformations of the tyre, and therefore they are heated.

At high speed, in particularly severe driving conditions, and particularly at inflation pressures lower than the standard, the tread of the tyre can be heated considerably and transmit the heat to the interior, where the temperature can exceed 100°C.

Notwithstanding the constraints set by the problems encountered and the bias of the field, the Applicant has found that it is possible to make self-sealing tyres provided with sealing complexes comprising particular permanent self-supporting films, apparently thermally unsuited, also incorporating them in green tyres.

Such sealing complexes are characterised by improved joinability, deformability and sealing capacity, in particular at low temperatures, and simultaneously maintain an optimal mechanical consistency. In addition the films employed in such complexes allow easily identifying the possible self-repaired perforations caused by puncture by pointed objects. Finally, they allow an advantageous and easy recycling of the semifinished products.

In particular, the Applicant has found that permanent self-supporting films based on polyolefins, apparently unsuited for being applied in the internal cavities of green tyres since they have lower melting points than the polymers commonly used for such purpose, surprisingly do not have deteriorated performances following vulcanisation of the tyre, if they are subjected to temperatures generally higher than their melting temperature. Advantageously, the present films - even when applied in tyres already partially vulcanised or in finished tyres - in addition to have the abovementioned merits (facilitated identification of the perforations, easy recycling, good sealing performances), they are not at all affected by the thermal and mechanical stresses that are generated during the rolling of the tyre on road.

In addition, the polyolefin thermoplastic film exhibits good structural characteristics, good support characteristics for the sealing composition, and good viscoelasticity characteristics which allow the composite to be suitably deformed during shaping, without then having to elastically return with a force such that it can cause the separation of the joint of the semifinished product and/or of the associated sealing composition (disassembly of the green tyre).

The present invention therefore relates to a self-sealing tyre which comprises a sealing composite comprising a sealing composition layer in association with a self-supporting thermoplastic film based on polyolefins.

More specifically, according to a first aspect, the present invention relates to a green or at least partially vulcanised tyre, comprising at least:
a carcass structure, a tread band applied in radially outer position to said carcass structure, optionally a layer of elastomeric material substantially impermeable to air, liner, applied in radially inner position to said carcass structure, a sealing composite applied to the radially more internal surface of said tyre axially extended at least at a crown portion of the tyre;
wherein said sealing composite comprises at least
a self-supporting thermoplastic film and
a sealing composition layer associated with and supported by said self-supporting thermoplastic film and
whererin the sealing composition layer is placed substantially in contact with the radially more internal surface of the tyre and the self-supporting thermoplastic film is radially inside the sealing composition layer,
characterised in that
   - the self-supporting thermoplastic film comprises at least 50% by weight with respect to the weight of the film itself of at least one or more polyolefins, wherein the at least one polyolefin is characterised by a fluidity index (MFI) less than 4, preferably less than 2, more preferably less than 1.5, still more preferably less than 1 gram per 10 minutes evaluated according to ASTM D1238 at 190°C/2.16 Kg. Said tyre comprises at least one carcass structure, a tread band applied in radially outer position to said carcass structure, optionally a layer of elastomeric material substantially impermeable to air (liner) applied in radially inner position to said carcass structure, a sealing composite applied to the radially more internal surface of said tyre axially extended at least at a crown portion of the tyre. Said sealing composite comprises a self-supporting thermoplastic film comprising at least 50% by weight with respect to the weight of the film itself of at least one or more polyolefins.

Advantageously the at least one polyolefin is characterised by a fluidity index (MFI) less than 4, preferably less than 2, more preferably less than 1.5, still more preferably less than 1 gram per 10 minutes (ASTM D1238, 190°C/2.16 Kg).

Said sealing composite also comprises a sealing composition layer associated with and supported by said self-supporting thermoplastic film.

The self-supporting thermoplastic film is radially inside the sealing composition layer and said sealing composition layer is placed substantially in contact with the radially more internal surface of the tyre. In a second aspect, the present invention relates to a self-sealing tyre for vehicle wheels obtained by vulcanisation of a green or partially vulcanised tyre according to the first aspect.

In a third aspect, the present invention relates to a process for producing a self-sealing tyre for vehicle wheels, comprising:
a) forming, on a forming drum, a green tyre comprising a carcass structure, a tread band applied in radially outer position to said carcass structure, optionally a layer of elastomeric material substantially impermeable to air (liner) applied in radially inner position to said carcass structure, a sealing composite applied to the radially more internal surface of said tyre, axially extended at least at a crown portion of the tyre,
b) arranging an expandable vulcanisation chamber;
c) expanding said expandable vulcanisation chamber within said green tyre in a manner so as to shape, mould and vulcanise the green tyre and to obtain a finished self-sealing tyre.

Said sealing composite comprises a self-supporting thermoplastic film comprising at least 50% by weight with respect to the weight of the film itself of at least one or more polyolefins. Advantageously the at least one polyolefin is characterised by a fluidity index (MFI) less than 4, preferably less than 2, more preferably less than 1.5, still more preferably less than 1 gram per 10 minutes (ASTM D1238, 190°C/2.16 Kg).

Said sealing composite also comprises a sealing composition layer associated with and supported by said self-supporting thermoplastic film.

The self-supporting thermoplastic film is radially inside the sealing composition layer and said sealing composition layer is placed substantially in contact with the radially more internal surface of the self-supporting tyre.

In a first variant of the third aspect, the invention relates to a process for producing a self-sealing tyre for vehicle wheels, comprising:
a') forming, on a forming drum, a green tyre comprising a carcass structure, a tread band applied in radially outer position to said carcass structure, optionally a layer of elastomeric material substantially impermeable to air (liner) applied in radially inner position to said carcass structure,
b') arranging an expandable vulcanisation chamber;
c') expanding said expandable vulcanisation chamber within said green tyre in a manner so as to shape, mould and vulcanise the green tyre and to obtain a finished tyre,
d') applying a sealing composite as defined above to the radially more internal surface of said tyre, axially extended at least at a crown portion of the tyre, in which the self-supporting thermoplastic film is radially inside the sealing composition layer and said sealing composition layer is placed substantially in contact with the radially more internal surface of said tyre.

In a second variant of the third aspect, the invention relates to a process for producing a self-sealing tyre for vehicle wheels, comprising:
a") forming, on a forming drum, a green tyre comprising a carcass structure, a tread band applied in radially outer position to said carcass structure, optionally a layer of elastomeric material substantially impermeable to air (liner) applied in radially inner position to said carcass structure, a sealing composition as defined above applied to the radially more internal surface of said tyre, axially extended at least at a crown portion of the tyre,
b") arranging an expandable vulcanisation chamber;
c") expanding said expandable vulcanisation chamber within said green tyre in a manner so as to shape, mould and vulcanise the green tyre at least partially and to obtain a finished tyre,
d") applying the self-supporting thermoplastic film as defined above in a position radially inside the sealing composition layer, and optionally
e") completing the vulcanisation.

A fourth aspect of the present invention is represented by a sealing composite for tyres comprising at least one self-supporting thermoplastic film comprising at least 50% by weight with respect to the weight of the film itself of at least one or more polyolefins.

Advantageously the at least one polyolefin is characterised by a fluidity index (MFI) less than 4, preferably less than 2, more preferably less than 1.5, still more preferably less than 1 gram per 10 minutes (ASTM D1238, 190°C/2.16 Kg).

Said sealing composite also comprises a sealing composition layer associated with and supported by said self-supporting thermoplastic film.

The self-supporting thermoplastic film is radially inside the sealing composition layer and said sealing composition layer is placed substantially in contact with the radially more internal surface of the tyre. Preferably, in the sealing composite according to the fourth aspect:
- said self-supporting thermoplastic film also comprises from 1 to 50%, preferably from 10 to 40%, more preferably from 15 to 35% by weight of one or more polar polymers selected from among polyvinyl acetate, ethylene-vinyl acetate copolymers, EVOH, polyvinyl acetate with a high level of hydrolysis (EVOH), polyvinyl alcohol (PVA, PVOH) or mixtures thereof; and/or
- said self-supporting thermoplastic film comprises at least 50%, 60%, 70%, 80%, 90% of a polyethylene having a fluidity index (MFI) less than 4, preferably less than 2, more preferably less than 1.5, still more preferably less than 1 gram per 10 minutes (ASTM D1238, 190°C/2.16 Kg), and/or
- said sealing composition comprises one or more plasticisers in an overall quantity of less than 200 phr, more preferably less than 100 phr, still more preferably less than 80 phr; and/or
- said sealing composition has a dynamic modulus value G* measured at 10 Hz and 60°C greater than 0.03 MPa, more preferably greater than 0.04 MPa, still more preferably greater than 0.06 MPa.

The present invention, in at least one of the aforesaid aspects, can have one or more of the preferred characteristics that are described hereinbelow.

With the phrase "partially vulcanised" it is intended a tyre which at least partially has been subjected to constituent material consolidation reactions of thermal and/or chemical nature, but which will require further treatments of such nature for the complete finishing.

For example, a partially vulcanised tyre can be a finished vulcanised tyre in all components thereof except in the sealing composition, if this has been applied after vulcanisation. In such case, the consolidation reaction can occur in an analogous manner or in milder conditions than those of vulcanisation.

With the phrase "substantially in contact", it is intended that the layer of sealing material is in contact with the radially more internal surface of the tyre for at least 90%, at least 95%, at least 98% of the surface thereof.

Preferably said green tyre comprises a liner and said sealing composition layer is placed substantially in contact with said liner.

The self-supporting thermoplastic film of the sealing composite comprises at least 50%, 60%, 70%, 80% or 90% by weight with respect to the weight of the film itself of at least one or more polyolefins (PO) in which the at least one polyolefin is characterised by a fluidity index (MFI) less than 4, preferably less than 2, more preferably less than 1.5, still more preferably less than 1 gram per 10 minutes (ASTM D1238, 190°C/2.16 Kg); the self-supporting thermoplastic film in accordance with the invention can also be essentially constituted by one or more of said polyolefins (PO).

With the expression "essentially constituted by" used herein, it is intended that the self-supporting thermoplastic film in accordance with the invention, comprises over 90%, 95% or 98% by weight of at least one polyolefin or of a mixture of two or more polyolefins.

Preferably, in the composition of the self-supporting thermoplastic film, the remaining composition of the one or more polyolefins, up to 100%, can comprise at least 1%, 5%, 10%, 15%, 20%, 30%, 40%, 50% of one or more polar polymers selected from among polyvinyl acetate, ethylene-vinyl acetate copolymers, EVOH, polyvinyl acetate with a high level of hydrolysis, polyvinyl alcohol (PVA, PVOH) or mixtures thereof.

Preferably, in the composition of the self-supporting thermoplastic film, the remainder up to 100% can comprise protective agents and/or process agents.

Preferably, in the composition of the self-supporting thermoplastic film, the remainder up to 100% does not comprise diene elastomers, nylon and/or polyesters.

With the term "polyolefin" as used herein, it is intended any thermoplastic polymer derived from polymerisation of unsaturated hydrocarbons containing ethylene or diene functionality.

In particular the term polyolefin comprises homopolymers and copolymers of olefins, and mixtures thereof. Specific examples comprise homopolymers of ethylene, of propylene, of butene, the copolymers ethylene-alpha-olefin, propylene-alpha-olefin, butene-alpha-olefin, polymethylpentenes and modified polymers thereof.

Preferably the self-supporting thermoplastic film according to the present invention comprises a polyolefin selected from among homopolymers and copolymers of ethylene, of propylene, of C₄-C₂₀ alpha-olefin, preferably alpha olefins C₄-C₁₀, and mixtures thereof, more preferably is selected from among homopolymers and copolymers of ethylene and mixtures thereof.

The at least one polyolefin of the present film is characterised by a fluidity index (MFI) generally less than 4, preferably less than 2, more preferably less than 1.5, still more preferably less than 1 gram per 10 minutes (ASTM D1238, 190°C/2.16 Kg).

The at least one polyolefin of the present film is characterised by a fluidity index (MFI) generally greater than 0.01, preferably greater than 0.1, more preferably greater than 0.2 grams per 10 minutes (ASTM D1238, 190°C/2.16 Kg).

The at least one polyolefin of the present film is characterised by a fluidity index (MFI) generally comprised between 0.01 and 4.0, preferably between 0.1 and 2.0, more preferably between 0.1 and 1.0, still more preferably between 0.2 and 0.9 grams per 10 minutes (ASTM D1238, 190°C/2.16 Kg). Preferably the polyolefin or the multiple polyolefins in the mixture of the self-supporting thermoplastic film has a melting point less than 160°C, 150°C, preferably less than 140°C or 130°C or 120°C. Preferably, the polyolefin material is a polyethylene selected from among homopolymers of ethylene, copolymers of ethylene with propylene, copolymers of ethylene with a C₄-C₈ alpha-olefin, such as for example butene and hexene, and copolymers of ethylene with vinyl acetate.

The polyethylene of the self-supporting thermoplastic film has a fluidity index (MFI) less than 4, preferably less than 2, more preferably less than 1.5, still more preferably less than 1 gram per 10 minutes (ASTM D1238, 190°C/2.16 Kg).

Preferably the polyethylene of the self-supporting thermoplastic film has a fluidity index (MFI) comprised between 0.01 and 4.0, more preferably comprised between 0.1 and 2.0, still more preferably comprised between 0.1 and 1.0, between 0.2 and 0.9 grams per 10 minutes (ASTM D1238, 190°C/2.16 Kg).

Polyethylene is generally classified based on density, such as high-density polyethylene (HDPE) when it has density greater than or equal to 0.941 g/cm³, medium-density polyethylene (MDPE) when it has density comprised in the interval from 0.926 to 0.940 g/cm³, linear low-density polyethylene (LLDPE) when it has density comprised in the interval from 0.915 to 0.925 g/cm³, low-density polyethylene (LDPE) when it has density comprised in the interval from 0.910 to 0.940 g/cm³, very low-density polyethylene (VLDPE) when it has density comprised in the interval from 0.880 to 0.915 g/cm³. Preferably the polyethylene of the self-supporting thermoplastic film is a linear low-density polyethylene (LLDPE), or a low-density polyethylene (LDPE), or a low-density polyethylene copolymerised with vinyl acetate (LDPE-EVA) or a medium-density polyethylene (MDPE), or mixtures thereof.

Generally, the polyethylene has a melting temperature less than about 135°, typically comprised between about 110 and about 130°C.

Examples of commercially available suitable polyolefins are the polyethylenes selected from among Exxon LL 1201 KG [LLDPE MFI 0.70 g/10min @190°C/2.16Kg; 1250 ppm slip agent], Exxon Enable 20-05 HH [m-PE MFI 0.50 g/10min @190°C/2.16Kg, no slip agent], Exxon Exceed 1012 MK [m-VLDPE MFI 0.50 g/10min @190°C/2.16Kg, 1000 ppm slip agent]) or mixtures thereof.

The self-supporting thermoplastic film in accordance with the invention can be either cross-linked or non-cross-linked; preferably it is cross-linked by using methods known to the man skilled in the art, such as radiation, peroxides or ionomers.

Preferably, the surface of the self-supporting thermoplastic film in contact with the sealing composition can be treated in a manner so as to increase the adhesion capacity thereof, for example with a crown treatment or with a plasma treatment and/or by covering with and/or incorporating copolar polymers - such as EVA, EVOH - in the film itself or only in its corresponding surface layer, in the case of multilayer film.

Preferably, the surface of the self-supporting thermoplastic film in contact with the sealing composition can be moulded so as to make the tyre more recognisable; preferably, multiple colour layers can be deposited as well as layer of metal, preferably aluminium, in order to make the mould stand out and protect the colour from contact with the sealing composition. Optionally, a lacquer treatment can be applied directly after the moulding or after the metallisation process.

Preferably, if the sealing composite is applied to the green tyre, the surface of the self-supporting thermoplastic film that is situated in radially more internal position in the tyre, i.e. that which during the vulcanisation process of the tyre is exposed to the vulcanisation chamber, is covered with a composition that facilitates the sliding, comprising slip agents or anti-block agents.

Preferably the surface of the self-supporting thermoplastic film not in contact with the sealing composition can be metallised, or metallised and moulded, or metallised, moulded and lacquered, or moulded and lacquered, or only lacquered in order to render the tyre more recognisable and to modify the surface friction properties, facilitating the sliding of the vulcanisation chamber.

Preferably, if the sealing composite is applied to the green tyre, the two outer surfaces of the self-supporting thermoplastic film have different properties with respect to each other, i.e. one has an increased adhesion capacity towards the sealing composition and the other has improved sliding towards the vulcanisation chamber, obtainable according to one or more of the above-considered treatments.

The self-supporting thermoplastic film in accordance with the invention can be single-layer or multilayer, e.g. bi-layer.

Preferably said self-supporting thermoplastic film is a single layer.

Preferably said single layer is essentially constituted by a polyolefin, or by two or more polyolefins mixed together, in which the at least one polyolefin is characterised by a fluidity index (MFI) less than 4, preferably less than 2, more preferably less than 1.5, still more preferably less than 1 gram per 10 minutes (ASTM D1238, 190°C/2.16 Kg).

Preferably said single layer is constituted by 1 to 50%, preferably from 10 to 40%, more preferably from 15 to 35% by weight, of one or more polar polymers selected from among polyvinyl acetate, ethylene-vinyl acetate copolymers, EVOH, polyvinyl acetate with a high level of hydrolysis, polyvinyl alcohol (PVA, PVOH) or mixtures thereof, the remainder up to 100% by weight being constituted by a polyolefin or by two or more polyolefins mixed together.

In a preferred embodiment, said single layer can comprise an agent that facilitates the sliding (slip agent) or alternatively said single layer can be covered, on one or both faces, with a composition comprising an agent that facilitates the sliding.

Preferably, the surface of the self-supporting single-layer thermoplastic film in contact with the sealing composition can be treated in a manner so as to increase the adhesion capacity thereof, for example with a crown treatment or with a plasma treatment.

Preferably, if the sealing composite is applied to the green tyre, a surface of the self-supporting single-layer thermoplastic film which is situated in radially more internal position in the tyre, i.e. that which during the vulcanisation process of the tyre is exposed to the vulcanisation chamber, is covered with a composition that facilitates the sliding.

Preferably, the two outer surfaces of the self-supporting single-layer thermoplastic film have different properties with respect to each other, e.g. if the sealing composite is applied to the green tyre, one surface has an increased adhesion capacity towards the sealing composition and the other an improved sliding towards the vulcanisation chamber, obtainable according to one or more of the above-considered treatments.

Preferably said self-supporting thermoplastic film is a multilayer.

Preferably said multilayer is constituted by 1 to 50%, preferably from 10 to 40%, more preferably from 15 to 35% by weight, of one or more polar polymers selected from among polyvinyl acetate, ethylene-vinyl acetate copolymers, EVOH, polyvinyl acetate with a high level of hydrolysis, polyvinyl alcohol (PVA, PVOH) or mixtures thereof, the remainder up to 100% by weight being constituted by at least one or more polyolefins mixed together, in which the at least one polyolefin is characterised by a fluidity index (MFI) less than 4, preferably less than 2, more preferably less than 1.5, still more preferably less than 1 gram per 10 minutes (ASTM D1238, 190°C/2.16 Kg).

If the sealing composite is applied to the green tyre, the surface of the multilayer self-supporting film, which is situated in radially more internal position in the tyre, i.e. that which during the vulcanisation process of the tyre comes into contact with the vulcanisation chamber, can comprise or be covered, on the exposed surface at the vulcanisation chamber, with a composition that facilitates the sliding and/or optionally the other surface, that in contact with the sealing composition, can be treated so as to increase the surface energy thereof and hence the adhesion capacity, e.g. with a crown treatment or with a plasma treatment.

Preferably, the surface of the self-supporting multilayer thermoplastic film in contact with the sealing composition can be moulded so as to make the tyre more recognisable; preferably multiple colour layers can be deposited as well as a layer of metal, preferably aluminium, in order to make the mould stand out and protect the colour from contact with the sealing composition. Optionally, a lacquer treatment can be applied directly after the moulding or after the metallisation process.

Preferably, if the sealing composite is applied to the green tyre, the surface of the self-supporting multilayer thermoplastic film that is situated in radially more internal position in the tyre, i.e. that which during the vulcanisation process of the tyre is exposed to the vulcanisation chamber, is covered with a composition that facilitates the sliding.

Preferably the surface of the self-supporting thermoplastic film not in contact with the sealing composition can be metallised, or metallised and moulded, or metallised, moulded and lacquered, or moulded and lacquered, or only lacquered in order to render the tyre more recognisable and to modify the surface friction properties, facilitating the sliding of the vulcanisation chamber.

Preferably, the two outer surfaces or the two surface layers of the self-supporting multilayer thermoplastic film have different properties with respect to each other, for example in the case in which the sealing compound is applied to the green tyre, one has an increased adhesion capacity towards the sealing composition and the other has improved sliding towards the vulcanisation chamber, obtainable according to one or more of the above-considered treatments and/or compositions. Agents adapted to facilitate the sliding are for example primary amides, either monounsaturated, e.g. erucamide and oleamide, or saturated, such as stearamide and behenamide; other suitable agents are secondary amides, such as stearyl erucamide and oleyl palmitamide, and bis-amides, such as ethylene bis stearamide; preferably they are primary amides.

Still more preferably, such agents suitable for facilitating the sliding are present in a quantity from 0.01% to 1.0% by weight with respect to the total weight of the self-supporting thermoplastic film.

The Applicant has surprisingly found that the polyolefins constituting the present thermoplastic film, even if they have melting temperatures generally much lower than those recommended in the state of the art (e.g. for the polyolefins Exxon LDPE LD 150AC, Exxon LL 1201 KG, Exxon Enable 20-05 HH and Exxon Exceed 1012 MK such temperatures vary from 109 to 123°C (peak melting point Exxon Method), much lower than 170°C, or lower than the interval 180°C and 260°C recommended for example in the abovementioned patent application US2012/0180923, are not negatively affected by the vulcanisation conditions, they do not show alterations of the sealing performances nor do they ruin the vulcanisation chamber.

Surprisingly, if the sealing composite is applied to the green tyre, the present self-supporting elastomeric films, based on polyolefins as defined above, not only are not negatively affected by the high heating temperatures applied in the production process but they even show improved sealing performances.

The self-supporting thermoplastic film of the present sealing composite is further characterised by one or more of the following parameters:
a) a load for elongation at break greater than 15 MPa, preferably greater than 20 MPa and/or a load for 5% elongation greater than 6 MPa, preferably greater than 8 MPa, more preferably comprised between 9 and 16 MPa, evaluated according to ASTM D882 on a sample with 12.57 mm width deformed at the speed of 500 mm/min at 23°C;
b) an elongation at break (AR) greater than 100% in the longitudinal direction, preferably greater than 150%, more preferably equal to or greater than 200%, evaluated according to ASTM D882 on a sample with 12.57 mm width deformed at the speed of 500 mm/min at 23°C;
c) a residual elastic force per linear centimetre of width (residual elastic tension) of the film about 5 minutes after reaching 50% deformation generally less than 3.6 N/cm, preferably less than 3.0 N/cm, more preferably less than 2.8 N/cm, preferably comprised between 2.75 and 1.75 N/cm.

Preferably the film has a residual elastic force about 5 minutes after reaching 50% deformation, normalized with respect to the thickness, preferably less than 20 MPa, 14 MPa, 12 MPa, preferably comprised between 11 and 7 MPa.

Preferably the film has a force for an elongation of 5% per linear centimetre greater than 1.5 N/cm, preferably greater than 2 N/cm, more preferably comprised between 2.25 and 4 N/cm.

The residual elastic force has been measured according to the method described in the experimental part (residual force test) on a test piece of 20 mm width and 200 mm length, with nominal thickness comprised between 10 and 100 µm.

According to the experiences of the Applicant, after shaping the thermoplastic film remains in a deformed state imposed by the new geometry. The reaction of the film to this imposed deformation is of viscoelastic type: i.e. a stress is produced that is opposed to the deformation and that, after an initial decrease, remains substantially constant over time.

The Applicant has found that if the sealing composite is applied to the green tyre via the thermoplastic polyolefin film, there is a threshold value below which the residual elastic tension no longer operates in the sense of deforming the green tyre or causing the separation of the radially inner layers. Indeed, with a limited decrease of the residual force of the film that is verified passing from the Nylon 6 of the prior art, characterised by a residual force on the order of 4 N/cm (per cm of width of the sample), about 5 minutes after 50% deformation, to the polyolefin according to the invention, in the same test having a residual force for example not greater than 3.0 N/cm, there is a considerable increase of the stability of the green tyre.

The Applicant has in fact verified that with the polyolefin-based thermoplastic film of the present invention, a stability of the green tyre is attained that is more prolonged over time with respect to the stability of the polyamide-based film.

Advantageously this allows greater flexibility in the green tyre management times between the shaping and the vulcanisation and/or a reduced need for difficult and complex fixing of the joint of the film.

Preferably, the self-supporting thermoplastic film has a residual elastic tension, per centimetre of width, generally less than 3.6 N/cm, preferably less than 3.0 N/cm, more preferably less than 2.5 N/cm, measured by pulling back a test piece cut longitudinally from the film itself, with 20 mm width and 200 mm length at 23°C, after having been preloaded to 0.4 N, at the speed of 500 mm/min, up to a predetermined set elongation, on the order of 20% - 50%, and then maintaining the deformed state for 5 minutes.

Preferably, said self-supporting thermoplastic film before shaping has a thickness less than 100 µm, more preferably less than 50 µm, 40 µm or 30 µm.

Preferably, said self-supporting thermoplastic film before shaping has a thickness greater than 10 µm, 15 µm or 20 µm.

Preferably, said self-supporting thermoplastic film before shaping has a thickness comprised between 10 µm and 50 µm, preferably between 15 and 40 µm, more preferably between 20 and 30 µm.

Preferably, in the finished tyre, said self-supporting thermoplastic film has a thickness less than 50 µm or 40 µm or 30 µm or 20 µm or 15 µm.

Preferably, in the finished tyre, said self-supporting thermoplastic film has a thickness greater than 7 µm or 10 µm or 15 µm or 20 µm.

Preferably, in the finished tyre, said self-supporting thermoplastic film has a thickness comprised between 7 µm and 40 µm, preferably between 10 µm and 30 µm.

The self-supporting films made of polyolefin used in the tyre of the present invention generally have thickness greater than those made of polyamide of the prior art. Even if it had been deemed that this greater thickness could have obstructed the cooperation of the film in the sealing action, it was instead found that it gives rise to surprisingly improved sealing performances.

During the building of the carcass of the tyre, the sealing composite can first be applied on the building drum according to an annular form obtained by means of a joint made at the ends of the sealing composite.

Preferably, the joint made at the ends of the sealing composite is consolidated with an adhesive film obtained via coupling of an adhesive to a self-supporting thermoplastic film, preferably similar to or equal to that used in the sealing composite itself. In such a manner, one prevents a concentration of stress at the edge of the adhesive film itself, and one reduces the possibilities of separation of the adhesive film after shaping and local tearing of the self-supporting film close to the edge of the adhesive film.

The subsequent toroidal shaping of the carcass structure and of the sealing composite radially inside the carcass structure involves a radial expansion both of the sealing composition layer and of the self-supporting thermoplastic film. The abovementioned size characteristics and material characteristics relative to the self-supporting thermoplastic film are such to allow the elastoplastic deformation without breakage of the film or of the joint, during the shaping of the tyre. The sealing composite must therefore be capable of accompanying such shaping in extension and shape.

The abovementioned characteristics of the film are such to maintain the integrity thereof not only with regard to the expansion (shaping) of the tyre but also during the heating (vulcanisation and moulding): the present self-supporting film, even if the melting temperatures of the polyolefins are lower than those of the other materials used in the prior art for analogous films, surprisingly is not damaged and does not contaminate the vulcanisation chamber (bladder).

The abovementioned characteristics of the film are such to permit it to support its own weight and that of the sealing layer deposited thereon, without being excessively deformed during transport and in the manipulations of the sealing composite, for example towards the building drum on which it must be applied. The sealing composition layer would instead tend to be deformed under its own weight if it was not supported on some support.

For such purpose, the Applicant has observed that in some plant types - comprising machines operating at different speeds, in particular comprising unwinding apparatuses (which unroll the reel of composite, remove and re-wind the second protective film, as defined hereinbelow) and cutting devices, where the sealing composite is cut to size - it is advantageous in the unwinding of the sealing composite to create a chamber in order to damp the movement speed variations of the sealing composite.

In such case, it is particularly important that the self-supporting thermoplastic film has a sufficiently high modulus to not undergo deformations and stretching greater than 1% which would overly alter the size thereof, in fact producing a semifinished product that is no longer adapted for the application on the drum and on the joint. As an example, at the production level, length tolerances of the semifinished products are generally acceptable that are on the order of about ±2.5 mm equal to about ±0.15%.

In addition, if the film was not sufficiently stable with regard to size, after having been significantly stretched and cut, it would contract, bringing the sealing composition in contact with the transport devices of the sealing composite, dirtying them and damaging the material itself.

The size stability of the sealing composite is correlated with the rigidity of the self-supporting film, such rigidity expressed here in terms of 5% modulus.

Due to the greater efficiency in sealing, with respect to the sealing composite with polyamide film, in the present sealing composite it is possible to advantageously reduce the thickness of sealing composition while maintaining the same sealing efficiency.

Preferably, said sealing composition layer of the sealing composite before shaping has a thickness less than about 8 mm, preferably less than 7 mm, more preferably less than 6 mm.

Preferably, said sealing composition layer before shaping has a thickness greater than about 2 mm, preferably greater than 2.5 mm, more preferably greater than 3.5 mm, preferably comprised between 4 and 5.5 mm.

For the purposes of the present invention, the composition of the sealing composition is not particularly limiting: for example, one of the compositions described in the document WO2009143895 or in the document WO2013093608 on behalf of the Applicant.

By way of example, the sealing composition can comprise at least
(a) from 55 to 95 phr of at least one natural or synthetic elastomer,
(b) from 5 to 45 phr of at least one pre-cross-linked elastomer;
(c) from 1 to 40 phr of at least one reinforcing filler;
(d) from 5 to 150 phr of at least one bonding resin.

Preferably, the sealing composition comprises at least:
(a) from 40 to 90 phr of polyisoprene elastomer
   from 0 to 45 phr of styrene - butadiene elastomer
   from 0 to 50 phr of styrene -diene-styrene block copolymer,
(b) from 5 to 45 phr of pre-cross-linked elastomer;
(c) from 1 to 40 phr of at least one reinforcing filler, preferably selected from among carbon black, silica or talc;
(d) from 10 to 80 phr of a bonding resin,
(e) from 0.1 to 6 phr of a vulcanising agent, preferably a peroxide or a molecule comprising sulfur. More preferably, the sealing composition comprises at least:
   (a) from 50 to 90 phr of polyisoprene elastomer
      from 5 to 45 phr of styrene-butadiene elastomer
      from 0 to 50 phr of styrene - isoprene-styrene block copolymer,
   (b) from 5 to 45 phr of a pre-cross-linked butadiene-styrene elastomer;
   (c) from 1 to 20 phr of at least one reinforcing filler, preferably selected from among carbon black, silica or talc;
   (d) from 20 to 50 phr of a bonding resin,
   (e) from 0.2 to 6 phr of a vulcanising agent, preferably a peroxide or a molecule comprising sulfur. Preferably the sealing composition comprises one or more plasticisers such as one or more oils or liquid polymers commonly used in the field (extender oils) in an overall quantity of less than 200 phr, more preferably less than 100 phr, still more preferably less than 80 phr.

Examples of plasticiser oils are polyolefin oils, paraffin oils, naphthenic oils, aromatic oils, mineral oils and mixtures thereof.

The sealing composition can also comprise from 0.05 phr to 5 phr of at least one peptising agent. Preferably the sealing composition has a dynamic modulus value G* measured at 10 Hz and at 60°C greater than 0.03 MPa, more preferably greater than 0.04 MPa, still more preferably greater than 0.06 MPa.

Preferably the sealing composition has a dynamic modulus value G* comprised between 0.05 and 0.15 MPa, more preferably between 0.06 and 0.09 MPa. Preferably the tan delta is comprised between 0.25 and 0.6.

The composition and the thickness of the sealing composition layer are selected, preferably in the scope of the abovementioned characteristics, in relation to the type of tyre to be produced, so as to provide the viscoelastic and stickiness characteristics optimal for each condition of use of the tyre itself.

The Applicant has in fact made sure to apply the invention to tyres for four-wheel vehicles for road use, such as tyres adapted to equip medium-powered and high-powered cars for transporting people (chord measurements from 195 mm to 245 mm), but without any problem the invention is also adapted to tyres for small utility vehicles or high-performance tyres (HP high performances - UHP ultra high performances) which chord measurements for example from 145 mm to 355 mm. With the due adaptations, the present invention can be applied to tyres for different vehicles such as motorcycles or heavy load vehicles for transporting people or things.

Preferably, the tyre of the invention is a winter tyre.

Preferably, in the finished tyre, said sealing composition layer has a thickness greater than about 2.0 mm and/or less than 6 mm, more preferably less than 4 mm, preferably between 2.5 mm and 4.0 mm. Said sealing composite is placed in the radially more internal position of the tyre to cover the entire circumferential extension for an axial (or transverse) extension at least of 60%, 70%, 80% or 90% of the crown portion of the tyre.

Preferably the sealing composite is extended symmetrically from both sides of the equatorial plane of the tyre.

Preferably such composite is axially extended for at least the entire crown portion of the tyre. Alternatively, the sealing composite is extended beyond the crown portion, preferably in the zone of the edges and sidewalls, before reaching the bead structures.

By "crown portion" of a tyre, it is intended the portion of the tyre structure corresponding to the region where the tread band is present. By way of example, the extension of the axial length of the crown portion can be identified by the distance between two segments perpendicular to the tread band starting from the edges of the tread band itself.

The tensile and thickness characteristics of the self-supporting thermoplastic film, along with the viscoelastic and stickiness characteristics of the sealing composition and its thickness, are arranged in a manner such that the composite reacts to the outflow of the perforating element with an effective sealing action in relation to the size of the tyre and to its use destination.

In addition, after vulcanisation, the self-supporting thermoplastic film easily allows the visual detection of possible perforations, even by the naked eye, which is easier than that of preceding films of analogous use.

Preferably, the sealing composite comprises two elongated elements made of elastomeric material, each applied in the tyre at a respective circumferential edge. Each elongated element made of elastomeric material has an axially inner portion, radially inside the sealing composite and arranged in contact with said sealing composite and an axially outer portion arranged in contact with the liner, if present.

Preferably, the tyre of the invention comprises a liner.

Preferably, the sealing composition layer has an axial extension greater than the axial extension of the self-supporting thermoplastic film and in which each elongated element made of elastomeric material is in contact with said sealing composition layer and with said self-supporting thermoplastic film so as to enclose and laterally retain the sealing composition.

The elongated elements ensure the lateral adhesion of the sealing composite to the liner.

The axially opposite edges of the self-supporting thermoplastic film are maintained adherent to the sealing composition by the overlap of each elongated element, which adheres to the respective lateral end of the sealing composition itself.

The lateral elongated elements made of elastomeric composition contain the material during the shaping of the tyre and the vulcanisation, when the pressure inside the mould presses the carcass against the inner walls of the mould itself.

The same elongated elements also prevent, during the shaping of the tyre, the self-supporting thermoplastic film from being detached from the sealing composition at axially opposite circumferential edges thereof.

The sealing composite is generally supplied and fed in the form of a multilayer sealing composite.

The multilayer sealing composite comprises, in addition to the sealing composite as described above, a second removable protective film, which covers the opposite surface of the sealing composition with respect to the surface that adheres to the first self-supporting thermoplastic film. This second protective film preserves the integrity of the sealing composition and prevents the adhesion of the sealing composite to itself, when wound in a reel, or to the parts of the machine during unrolling. This second protective film is then removed, generally before the cutting step, without damaging the integrity of the sealing composition.

Generally, the second protective film has a thickness less than 100 µm, preferably less than 50 µm. Preferably, the second protective film has width greater than that of the thermoplastic film and also greater than that of the sealing composition, more preferably it has width greater even than the total width of the semifinished product, preferably also comprising the elastomeric elongated elements. Preferably the second film comprises, more preferably it is constituted by, polymer materials such as polyolefins, polyesters, polyamides, polycarbonates, polyvinyl chlorides, generally made anti-adhesive with a layer of silicone or fluorinated polymer, or it is a fluorinated polyolefin such as a polytetrafluoroethylene, which does not require treatments to make it anti-adhesive. Preferably the protective film is made of siliconised polyester, i.e. polyester made anti-adhesive with a silicone treatment.

Preferably, said composite can also comprise the two elongated elements made of elastomeric material, each applied at a respective edge of the sealing composite.

Alternatively, said two elongated elements can be applied in a subsequent step, in the building machine at the time of cutting, or during transport on belts, or on the first-stage building drum. Further characteristics and advantages will be clearer from the detailed description of a preferred but not exclusive embodiment of a self-sealing tyre for vehicle wheels comprising a sealing composite, in accordance with the present invention.

Such description will be set forth hereinbelow with reference to the enclosed drawings, provided only by way of a non-limiting example, in which:
- figure 1 schematically shows, in radial half-section, a self-sealing tyre for vehicle wheels;
- figure 2 shows a section of a sealing composite associated with two elongated elements made of elastomeric material and intended to form part of the self-sealing tyre of figure 1;
- figure 3 represents a section of a multilayer sealing composite comprising the sealing composite of figure 2 and a second removable protective film;
- figure 4 is the comparative graphical representation of the relaxation under stress of two self-supporting films, one with polyamide base (comparative example C of the prior art) and the other with polyolefin base (according to the invention, example 1);
- figure 5 is a photograph which shows the corrugations of the self-supporting film, the deformation and the separation of the joint of a green semifinished product comprising a sealing composite with polyamide film;
- figures 6a and 6b are photographs which frame corresponding portions of a comparative tyre (6a film made of polyamide C) and of a tyre of the invention (6b film made of polyolefin), and show that the holes are decidedly more evident in the tyre of the invention.

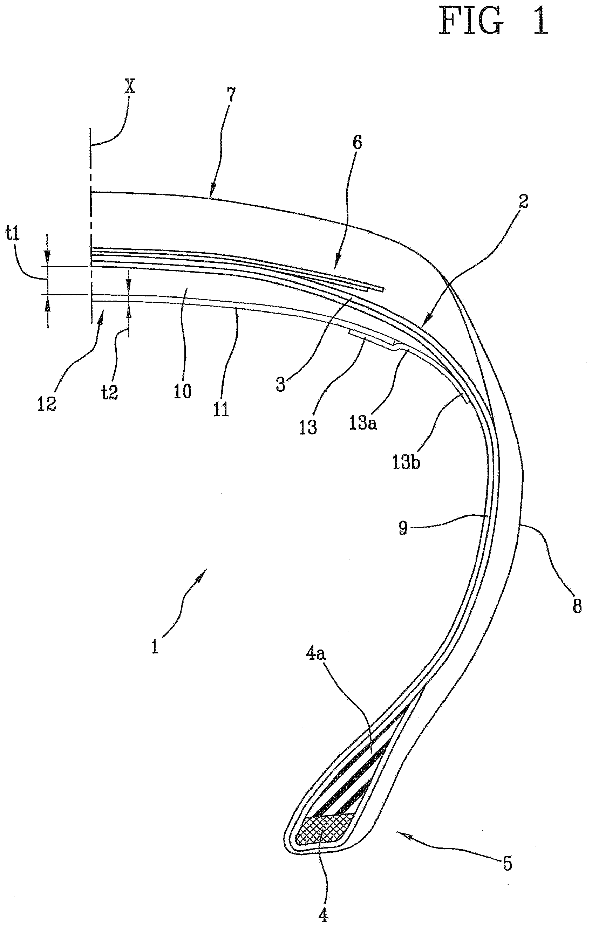

In figure 1, reference number 1 indicates a self-sealing tyre for vehicle wheels, which generally comprises a carcass structure 2 comprising at least one carcass ply 3 having respectively opposite end flaps engaged with respective anchoring annular structures 4, possibly associated with elastomeric fillers 4a, integrated in the zones 5 normally identified with the name "beads". The at least one carcass ply 3 comprises a plurality of textile or metallic reinforcing cords arranged parallel to each other and at least partially covered with a layer of elastomeric material.

The carcass structure 2 is associated with a belt structure 6 comprising one or more belt layers, situated radially superimposed with respect to each other and with respect to the carcass ply 3, typically having metallic reinforcing cords.

Such reinforcing cords may have crossed orientation with respect to the direction of circumferential extension of the tyre 1.

In radially outer position with respect to the belt structure 6, a tread band 7 is applied that is made of elastomeric composition, like other semifinished products constituting the tyre 1.

Respective sidewalls 8 made of elastomeric composition are also applied in an axially outer position on the lateral surfaces of the carcass structure 2, each extended from one of the lateral edges of the tread band 7 up to the respective anchoring annular structure to the beads 5.

A radially inner surface of the tyre 1 is also preferably internally covered with a layer of elastomeric material substantially impermeable to air, or so-called liner 9.

In the embodiment illustrated in figure 1, the tyre 1 is of the type for motor vehicles.

Typically, in this case the belt structure 6 further comprises at least one radially outer layer comprising textile or metallic cords or a combination of textile/metallic cords, arranged according to an angle that is substantially zero with respect to the circumferential extension direction of the tyre.

In accordance with alternative embodiments of the present invention, the tyre 1 is of the type intended for heavy vehicle use.

In accordance with further embodiments of the present invention, the tyre 1 is for motorcycles. The profile of the cross section of the tyre for motorcycles (not illustrated) has a high transverse curvature since it must ensure a sufficient footprint area in all motorcycle tilt conditions. The transverse curvature is defined by the value of the ratio between the distance f of the top of tread from the line passing through the laterally opposite ends of the tread itself, measured on the equatorial plane of the tyre, and the width C defined by the distance between the laterally opposite ends of the tread itself. With tyre with high transverse curvature, a tyre is indicated whose transverse curvature ratio (f/C) is at least 0.20.

The self-sealing tyre 1 according to the invention also comprises a sealing composition layer 10 arranged at a crown zone of the tyre 1 and in radially inner position with respect to the liner 9. The sealing composition layer 10 is extended for the entire circumferential extension of the tyre 1. The sealing composition layer 10 has preferably a maximum thickness "t1" substantially at the equatorial plane "X" of the finished tyre 1, i.e. moulded and vulcanised, and is thinned towards the axial ends of the crown zone (figure 1). Preferably, said maximum thickness "t1" is comprised between about 2 mm and about 6 mm still more preferably between about 2.5 mm and 4.0 mm.

In the present description, with the term phr (acronym of "parts per hundred of rubbers") it is intended to indicate parts by weight per 100 parts by weight of total elastomer base. For the calculation of 100 parts of total elastomer base, possible additives are not considered (such as possible elastomeric resins or extension oils).

The sealing composition comprises, according to a first preferred embodiment, from 55 to 95 phr of one or more natural or synthetic elastomers, from 5 to 45 phr of a pre-cross-linked elastomer, from 5 to 50 phr of at least one bonding resin and from 1 to 40 phr of at least one reinforcing filler. According to a particularly preferred embodiment, the sealing composition also comprises from 25 to 65 phr of plasticiser (oil or liquid polymer), from 0.05 phr to 1 phr of at least one peptising agent and from 0.1 to 6 phr of at least one cross-linking agent; in addition, the sealing composition can comprise from about 1 phr to about 20 phr of at least one homogenising agent.

According to a second preferred embodiment, the sealing composition comprises from 20 phr to 100 phr of at least one unsaturated styrene thermoplastic elastomer, from 0 to 80 phr of at least one synthetic or natural elastomer, from 20 to 200 phr, preferably from 30 phr to 150 phr, of at least one bonding resin, from 0.1 to 6 phr of at least one cross-linking agent, from 10 phr to 200 phr, preferably from 20 phr to 60 phr, of plasticiser (oil or liquid polymer), and preferably from 1 to 40 phr, preferably from 5 to 30 phr, of at least one reinforcing filler.

According to a preferred embodiment the sealing composition can also comprise from about 1 phr to about 20 phr of at least one homogenising agent. In a further embodiment the sealing composition can also comprise from 0.05 phr to 5 phr of at least one peptising agent.

Preferably, the synthetic or natural elastomers included in the sealing composition can be selected from among those commonly used from among the elastomeric materials cross-linkable with sulfur or peroxides, which are particularly suitable for producing tyres, i.e. from the elastomeric polymers or copolymers with an unsaturated chain having a vitreous transition temperature (Tg) generally below 20°C, preferably in the range from 0°C to -110°C. These polymers or copolymers can be of natural origin or they can be obtained by means of polymerisation in solution, polymerisation in emulsion or polymerisation in gaseous phase of one or more conjugated diolefins, optionally mixed with at least one comonomer selected from among monovinylarenes and/or polar comonomers in a quantity not greater than 60% by weight. The conjugated diolefins generally contain from 4 to 12, preferably from 4 to 8 carbon atoms and can be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-Butadiene or isoprene are particularly preferred.

The polar comonomers that can be possibly used can be selected, for example, from among: vinylypyridine, vinylquinoline, acrylic acid esters and alkylacrylic acid esters, nitriles, or mixtures thereof, such as methylacrylate, ethylacrylate, methyl methacrylate, ethyl methacrylate, acrylonitrile, or mixtures thereof.

Preferably, the synthetic or natural elastomer included in the sealing composition can be selected, for example, from among: cis-1,4-polyisoprene (natural or synthetic rubber, preferably natural rubber), 3,4-polyisoprene, polybutadiene (in particular polybutadiene with a high content of 1,4-cis), isoprene / isobutene copolymers, possibly halogenated, 1,3-butadiene / acrylonitrile copolymers, styrene / 1,3-butadiene copolymers, styrene / isoprene / 1,3-butadiene copolymers, styrene / 1,3-butadiene / acrylonitrile copolymers, or mixtures thereof.

According to a preferred embodiment, the pre-cross-linked elastomer is a butadiene-styrene copolymer produced with a process of polymerisation under hot emulsion, with a styrene content from 2 to 50% by weight, preferably from 15% to 35%. Particularly preferred are the grades SBR1009, 1009AF and 4503C produced by Lion Elastomers.

According to a preferred embodiment, the unsaturated styrene thermoplastic elastomer is a styrene - diene - styrene polymer, preferably selected from among styrene /butadiene /styrene (SBS) block copolymer, styrene /isoprene /styrene (SIS) block copolymer, styrene/ butadiene/ isoprene/ styrene (SBIS) block copolymer, and mixtures thereof, also optionally comprising the corresponding diblock thermoplastic elastomers, such as styrene-butadiene (SB) and styrene-isoprene (SI). Particularly preferred are the styrene/ isoprene/ styrene block copolymer or mixtures of one or more unsaturated styrene thermoplastic elastomers containing at least 50% of styrene/ isoprene/ styrene block copolymer.

Preferably the block copolymer has a content of styrene from about 10% to about 30%, more preferably from about 12% to about 18%.

Preferably the block copolymer has a percentage of "diblock" less than 70%, still more preferably less than 60%.

Preferably the percentage of "diblock" is comprised between 15% and 55%.

With diblock percentage, it is intended the percentage of block polymer constituted by only two segments: a polystyrene segment and an elastomeric segment.

Even if such "diblocks" are present in the block polymers mainly constituted by three segments - styrene-elastomer-styrene and are considered to be an impurity due to the imperfect efficiency of the "living polymerisation", the Applicant deems that the presence of diblocks can be advantageously modulated in order to improve the quality of the sealing composition.

It is deemed that with an increased percentage of diblock, there is a corresponding greater stickiness, but smaller modulus and lesser cohesion of the sealing composition.

Particularly preferred are styrene/ isoprene/ styrene block copolymers with a content of styrene equal to or less than 20%, more preferably comprised between 14% and 20%.

Such copolymers are for example sold with the name Europrene® SOL T190, T9133 by Polymers Europa, Vector® 4113, 4114 by Dexco Polymers, Kraton® D1111, D1112 and D1107J by Kraton.

The bonding agents advantageously used in the present invention can be selected from the group of hydrocarbon resins, phenol-based resins, coal-based resins, xylene-based resins and natural resins such as rosin-based resins or terpene-based resins, having an average molecular weight comprised between 200 and 50000, typically between 500 and 10000 and which provides stickiness when the resin is mixed with natural or synthetic rubber.

The aforesaid average numeric molecular weight (Mn) can be measured according to techniques known in the field, such as by means of gel permeation chromatography (GPC). Examples of hydrocarbon resin commercial products comprise resins based on aromatic petrols such as PETCOAL produced by Tosoh Co., Ltd; C5/C9 hydrocarbon-based resins such as PETROTACK produced by Tosoh Co; C5 hydrocarbon-based resins such as Escorez® 1102 (produced by Exxon Mobil). Examples of phenol-based resins comprise resins with alkylphenol-formaldehyde base, and derived resins modified with rosin, resins with alkylphenol-acetylene base, modified alkylphenol and terpene-phenol resins. Specific examples indicated by brand comprise commercial products such as RESINA SP-1068 (produced by SI GROUP Inc.) which is an octylphenol-formaldehyde resin, and KORESIN (produced by BASF Company) which is a p-t-butylphenol-acetylene resin.

Examples of coal-based resins include coumarone-indene resins. Specific examples comprise commercial products, mentioned by brand, such as NOVARES C resins (produced by RUTGERS CHEMICAL GmbH) which are indene-coumarone synthetic resins (such as NOVARES C10, C30, and C70).

Examples of natural resins are the rosin resins and the terpene resins, which can be as is or modified: examples of these classes are the terpene resins DERCOLYTE produced by DRT, the resins derived from rosin acids DERTOLINE, GRANOLITE and HYDROGRAL produced by DRT.

Examples of xylene-based resins comprise the xylene-formaldehyde resins.

The aforesaid bonding agents can be used on their own or mixed with each other.

Suitable cross-linking agents are sulfur or molecules containing sulfur, in the presence of compounds containing zinc and fatty acids, or peroxides.

Specific examples of molecules containing sulfur usable as cross-linking agents in the sealing materials for the obtainment of self-sealing tyres are elementary sulfur, thiurams, such as tetraisobutyl thiuram disulfide or tetrabenzyl thiuram disulfide, or dithiophosphates, such as zinc dibutyldithiophosphate, or dithiocarbamates, such as zinc dimethyl dithiocarbamate, together with ZnO or compounds containing zinc, fatty acids and sulfenamides, such as N-t-butyl-2-benzothiazyl sulfenamide (TBBS) or N-cyclohexyl-2-benzothiazyl sulfenamide (CBS), or thiazoles, such as 2,2'-dithiobis-(benzothiazole) (MBTS).

Specific examples of peroxides usable as cross-linking agents in the sealing materials for the obtainment of self-sealing tyres are organic peroxides such as dicumyl peroxide (DCP), 2,5-dimethyl-2,5-di(t-butyl-peroxy)hexane (DBPH), bis-(2,4-dichlorobenzoyl) peroxide (DCBP), di-t-butyl-peroxide. Preferably, a peroxide is used as cross-linking agent, still more preferably 2,5-dimethyl-2,5-di(t-butyl-peroxy)hexane (DBPH).

A specific example of usable DBPH is a mixture of 45% DBPH with calcium carbonate and silica sold with the name Luperox 101 XL45 by Arkema.

The quantity of peroxide is preferably comprised between about 0.1 phr and about 6 phr.

The presence of peroxide or sulfur or another cross-linking agent allows the partial chemical cross-linking of the sealing composition during the vulcanisation of the tyre in a manner so as to improve the dynamic sealing characteristics of the sealing composition layer.

At least one reinforcing filler can be advantageously added to the abovementioned sealing composition, in a quantity generally from 1 phr to 40 phr, preferably from 5 phr to 15 phr. The reinforcing filler can be selected from among those commonly used for cross-linked products, in particular for tyres, such as carbon black, silica, aluminium, aluminosilicates, calcium carbonate, kaolin or mixtures thereof. Particularly preferred are carbon black, silica and mixtures thereof.

At least one or more plasticisers can be added to the sealing composition selected from among the oils (extender oils) or liquid polymers commonly used in the field, in an overall quantity preferably less than 200 phr, more preferably less than 100 phr, still more preferably less than 80 phr.

Examples of suitable plasticiser oils are polyolefin oils, paraffin oils, naphthenic oils, aromatic oils, mineral oils and mixtures thereof.

Examples of suitable liquid polymers are the liquid polymers with butadiene base (BR), isoprene base (IR), isoprene / butadiene base (IBR), styrene / butadiene base (SBR), possibly hydroxy and epoxy functionalisation, or depolymerised natural liquid polymers (NR).

According to a preferred embodiment, said reinforcing filler of carbon black can be selected from among those which have a surface area not less than 20 m²/g (determined by the STSA - Statistical Thickness Surface Area - according to ISO 18852:2005).

In radially inner position with respect to the sealing composition layer 10 and in contact with said sealing composition layer 10, a self-supporting thermoplastic film 11 made of polyolefin is arranged. The self-supporting thermoplastic film 11 is extended, as the sealing composition layer 10, over the entire circumferential extension of the tyre 1 and has a width or an axial extension slightly less than the axial extension of said layer 10.

Preferably, said self-supporting thermoplastic film 11 is essentially constituted by a polyolefin characterised by a fluidity index (MFI) less than 4, preferably less than 2, more preferably less than 1.5, still more preferably less than 1 gram per 10 minutes (ASTM D1238, 190°C/2.16 Kg), preferably by a polyethylene selected from among those sold with the name Exxon LL 1201 KG [LLDPE MFI 0.70 g/10min @190°C/2.16Kg; 1250 ppm slip agent], Exxon Enable 20-05 HH [m-PE MFI 0.50 g/10min @190°C/2.16Kg, no slip agent], Exxon Exceed 1012 MK [m-VLDPE MFI 0.50 g/10min @190°C/2.16Kg, 1000 ppm slip agent]) or mixtures thereof.

Alternatively, said self-supporting thermoplastic film 11 comprises at least 50%, at least 60%, at least 70% of a polyolefin or multiple polyolefins.

Alternatively, said self-supporting thermoplastic film 11 is constituted by 1 to 50%, preferably from 10 to 30%, more preferably from 15 to 25% by weight of one or more polar polymers selected from among polyvinyl acetate, ethylene-vinyl acetate copolymers, EVOH, polyvinyl acetate with a high level of hydrolysis, polyvinyl alcohol (PVA, PVOH) or mixtures thereof, the remainder up to 100% by weight being constituted by a polyolefin or by two or more polyolefins mixed together.

More preferably the self-supporting thermoplastic film 11 is a film overall containing 80% polyolefins and 20% polyvinyl alcohol, with MFI equal to 0.60 grams per 10 minutes (ASTM D1238, 190°C/2.16 Kg), melting peaks at 107°C, 119°C and 170°C (the latter relative to PVOH) measured as maximums in the DSC trace obtained in a scan from 50°C to 200°C at 10°C/min.

Preferably, the self-supporting thermoplastic film 11 has an elongation at break greater than 100%, more preferably greater than 150%, still more preferably equal to or greater than 200% in longitudinal direction, evaluated according to ASTM D882 on a sample with 12.57 mm width deformed at the speed of 500 mm/min at 23°C

Preferably, in the finished tyre, said self-supporting thermoplastic film 11 has a thickness "t2" comprised between about 10 µm and about 40 µm.

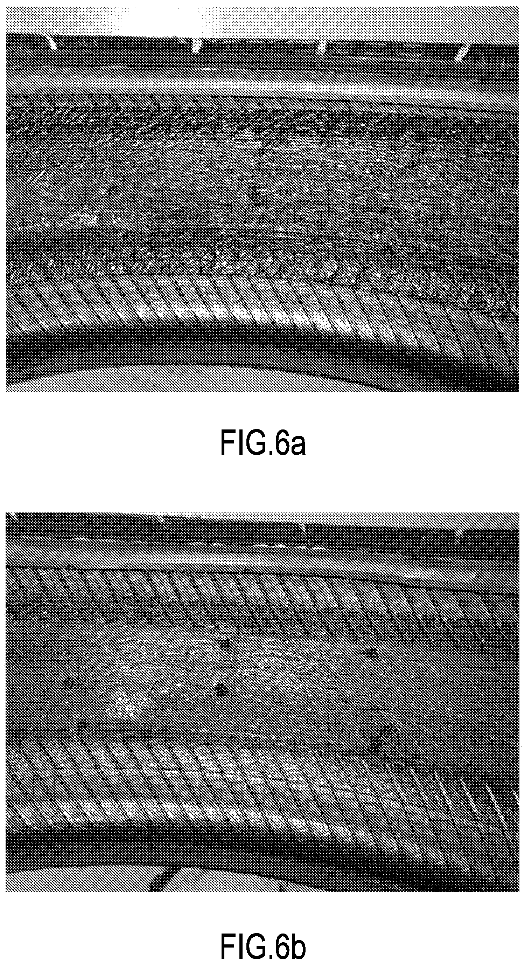

The sealing composition layer 10 and the self-supporting thermoplastic film 11 form a sealing composite 12. The sealing composite 12, when a pointed element (such as a nail) penetrates into the tyre and traverses the sealing composition layer 10 and the self-supporting thermoplastic film 11, is able to adhere to the object inserted therein and can also flow into the hole when such object is removed, thus sealing the hole itself and preventing the outflow of air from the tyre. The sealing composite 12 can be easily perforated by the pointed element, while maintaining a deformability and stickiness such to contribute the transfer of the sealing composition during the expulsion of the pointed element. The perforations thus sealed are clearly visible on the surface of the sealing composite, through the self-supporting film 11 (Fig. 6b).

The tyre 1 also comprises preferably two elongated elements made of elastomeric material 13, each arranged at a circumferential edge of the sealing composite 12. An axially inner portion 13a of each elongated element made of elastomeric material 13 is preferably superimposed on the sealing composite 12 and is arranged in radially inner position with respect to said sealing composite 12. An axially outer portion 13b of each elongated element made of elastomeric material 13 lies in contact with the liner 9. By axially inner portion 13a, it is intended a portion closer to an equatorial plane "X" of the tyre 1 with respect to the axially outer portion 13b.

More in detail, the radially inner portion 13a in turn preferably has an axially inner zone applied directly on the self-supporting thermoplastic film 11 and an axially outer zone directly applied on a surface of the sealing composition layer 10. In fact, the sealing composition layer 10 preferably has an axial extension greater than the axial extension of the self-supporting thermoplastic film 11. It follows that each elongated element made of elastomeric material 13 is in contact both with the sealing composition layer 10 and with the self-supporting thermoplastic film 11.

The building of a precursor of a tyre 1, as described above, including the sealing composite 12, is preferably actuated by means of assembly of respective semifinished products on one or more forming supports, not shown.

The carcass structure and the belt structure are generally made separately from each other in respective work stations, in order to be mutually assembled at a later time.

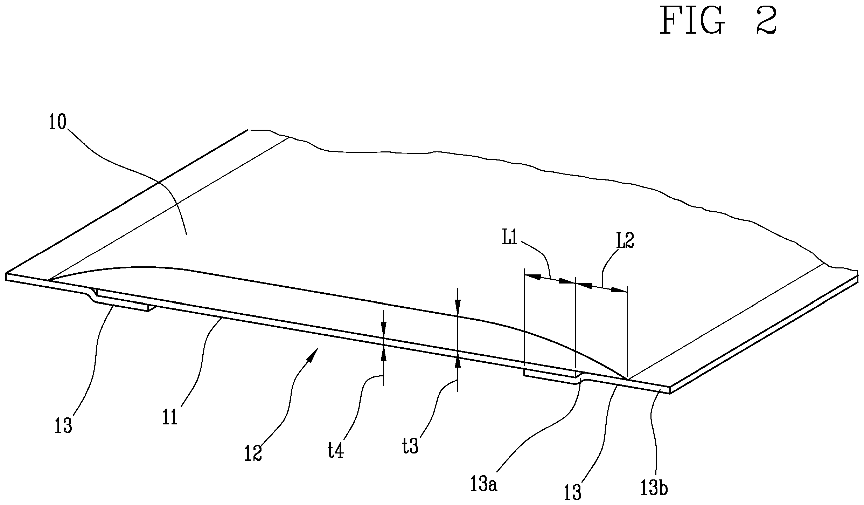

More particularly, the obtainment of the carcass structure first provides for the formation of the sealing composite 12 as a continuous belt comprising the sealing composition layer 10 arranged on the and supported by the self-supporting thermoplastic film 11 joined to the elongated elements in elastomeric material 13 associated with opposite longitudinal edges of the abovementioned sealing composite 12 (figure 2). Preferably, before incorporation of the sealing composite 12 in the precursor of the tyre 1 and the shaping thereof, each elongated element 13 is in contact with the self-supporting thermoplastic film 11 for a first width "L1" and with the sealing composition layer 10 for a second width "L2". Said widths are preferably substantially equal to each other.

The sealing layer 10, before incorporation of the sealing composite 12 in the precursor of the tyre 1 and the shaping thereof, has a thickness "t3" comprised between about 3 mm and about 7 mm.

The self-supporting thermoplastic film 11, before incorporation of the sealing composite 12 in the precursor of the tyre 1 and the shaping thereof, has a thickness "t4" less than 50 µm and preferably comprised between about 15 and 30 µm.

The sealing composite 12 provided with the respective elongated elements made of elastomeric material 13 is cut to size, preferably with angled (chamfer) cutting and wound around a radially outer surface of a building drum, maintaining the thermoplastic film 11 in a radially more internal position. Opposite end flaps of the sealing composite 12 are mutually joined due to the adhesivity of the sealing composition; preferably the joint is covered (in order to prevent the outflow of sealing composition at the time of vulcanisation) and consolidated by means of (for example) an adhesive tape (joint). Preferably the aforesaid adhesive tape is made via coupling of an adhesive to a self-supporting thermoplastic film, similar or equal to that used in the sealing composite itself; preferably therefore a "thermoplastic adhesive film" will be used. In such a manner, one avoids a concentration of stress at the edge of the thermoplastic adhesive film itself, and one reduces the possibilities of separation of the thermoplastic adhesive film after shaping and of local tearing of the self-supporting film close to the edge of the thermoplastic adhesive film, as could instead occur in the case of a generic adhesive tape, typically much more rigid than the self-supporting thermoplastic film that is the object of the invention. As adhesives, the following can be used: the adhesive produced by 3M with the name 9472 LE, or the adhesive produced by NITTO with the name 5015T.

The liner 9 and the carcass ply or plies 3 are applied on the sealing composite 12 to form a so-called "carcass sleeve", typically substantially cylindrical. The anchoring annular structures 4 to the beads 5 are fit or formed on the opposite end flaps of the carcass ply or plies 3, which are subsequently turned up around the annular structures 4 themselves so as to enclose them in a kind of noose.

On a second drum or auxiliary drum, a so-called "outer sleeve" is obtained comprising the belt layers 6 applied in mutual radial superimposition, and possibly the tread band 7 applied in radially outer position to the belt layers 6. The outer sleeve is then picked up from the auxiliary drum in order to be coupled to the carcass sleeve. The outer sleeve is for such purpose arranged coaxially around the carcass sleeve, after which the carcass ply or plies 3 are shaped according to a toroidal configuration by means of mutual axial approaching of the beads 5 and simultaneous introduction of pressurised fluid within the carcass sleeve, so as to cause a radial expansion of the carcass plies 3 until they are made to adhere against the inner surface of the outer sleeve.

Following the shaping, the thermoplastic film shows a tension relaxation such that the residual elastic tension does not cause deformation of the green tyre or cause the separation of its radially inner layers. The residual elastic tension of the film about 5 minutes after reaching 50% deformation (using a speed of deformation of 500 mm/min, on a 200 mm x 20 mm rectilinear test piece preloaded to 0.4 N) must preferably be less than 3.6 N/cm (Newton per linear centimetre of width of the film), more preferably less than 3.0 N/cm, still more preferably less than 2.8 N/cm.

The assembly of the carcass sleeve with the outer sleeve can be actuated on the same drum used for making the carcass sleeve, and in such case is termed "single-stage building process" or "unistage process". Building processes are also known of the so-called "two-stage" type, in which a so-called "first-stage drum" is employed for making the carcass sleeve, while the assembly between the carcass structure and the outer sleeve is actuated on a so-called "second-stage drum" or "shaping drum", onto which the carcass sleeve picked up from the first-stage drum and subsequently the outer sleeve picked up from the auxiliary drum are transferred.

Following the building of the green tyre 1, a moulding and vulcanisation treatment is executed, aimed to determine the structural stabilisation of the tyre 1 by means of cross-linking of the elastomeric compositions as well as to impart, on the tread band 7, a desired tread pattern and at the sidewalls 8 possible distinctive graphic marks. During vulcanisation, between the elastomer macromolecules of the sealing composition, a network of covalent bonds is created which, in accordance with its density, prevents the sliding thereof, rendering the material increasingly insoluble, infusible and elastic. After vulcanisation, the sealing composition layer 10 attains optimal characteristics of deformability, cohesion and stickiness.

During vulcanisation, notwithstanding the high temperatures employed, the self-supporting thermoplastic film 11 and the sealing composition 10 remain integral, they do not damage the vulcanisation chamber and they attain optimal sealing performances.

Alternatively, the sealing composite can be applied to the radially more internal surface of the tyre partially or completely vulcanised and optionally be subjected to subsequent thermal and/or chemical consolidation treatments.

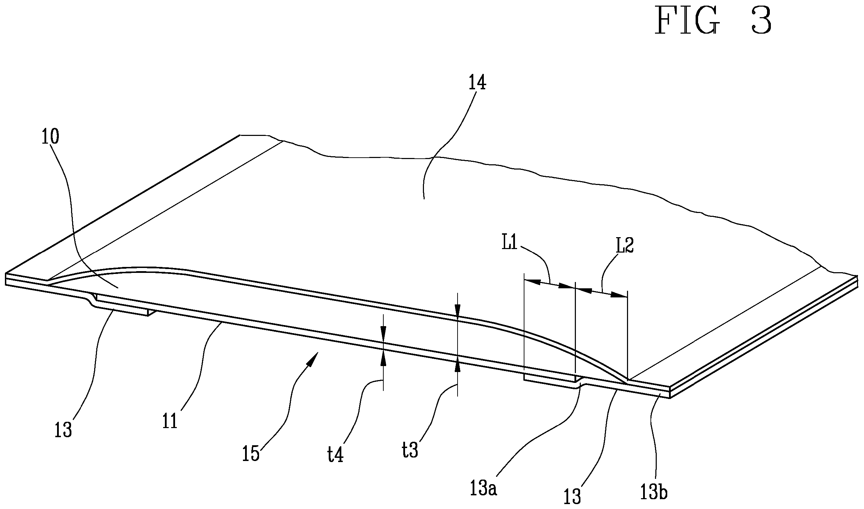

In Figure 3, the sealing composite 10 of figure 2 is covered with a second removable protective film 14 in order to make the multilayer sealing composite 15. The multilayer sealing composite 15 can be prepared, for example via extrusion of the sealing composition 10 on the second protective film 14 and mechanical coupling with the self-supporting thermoplastic film 11 and the lateral elongated elements 13 to give the strip-like composite, which is cooled and generally preserved wound in a reel.

### EXAMPLES

### Traction test

In order to characterise the self-supporting film, a traction test was executed on two test pieces of film A and on two test pieces of film B according to provision ASTM D882, in the following test conditions:
- test temperature 23°C
- relative humidity 46%
- test speed = 500 mm/min
- test piece width 12.57 mm

The results of the test are reported in the following table 1.

**TABLE 1**

| Film | Composition | Properties | Elongation at break (%) |
|---|---|---|---|
| A-Exxon | Polyethylene | d: 0.920 g/cm3 | 400 |
| Enable 20-05 | | MFI: 0.50 | |
| 25 µm | | Melting Temp peak 114°C | |
| B | Polyolefins 80% | MFI: 0.60, Melting Temp peaks at 107°C, 119°C and 170°C (the latter relative to PVOH) | 245 |
| 25 µm | Polyvinyl alcohol 20% | | |

### MFI: α /10 min, ASTM D1238, 190°C/2.16 Kg

Melting temperature peaks: measured as maximums in the DSC trace obtained in a scan from 50°C to 200°C at 10°C/min.

### Mechanical stability of the sealing composite

In the scope of the above-described test (ASTM D882), the force was also measured for an elongation of 5% per cm of width of various film samples, comparison C and according to the invention A and B, as an indication of the mechanical stability of the semifinished product, i.e. of the sealing composite comprising the self-supporting film, the sealing composition and, preferably, the two elongated elements.

The types of self-supporting film tested and the respective measured force values are shown in the following Table 2:

**TABLE 2**

| Film | Composition | Nominal thickness (micron) | Force (N/cm) | Normalised force for 5% elongation vs. thickness (MPa) |
|---|---|---|---|---|
| A Exxon Enable 20-05 HH | Polyethylene | 25 | 2.5 | 10 |
| B | Polyolefins 80% Polyvinyl alcohol 20% | 25 | 3 | 12 |
| C Filmon CXS18 | Polyamide | 18 | 7.2 | 40 |

It is indicated that all the tested materials have good rigidity at low elongation. A typical sealing composite with 20 cm width and 5 mm thickness has a linear weight of about 1 Kg per m, and hence due to its weight is able to exert forces on the order of 10N on the self-supporting thermoplastic film for a meter of non-supported semifinished product.

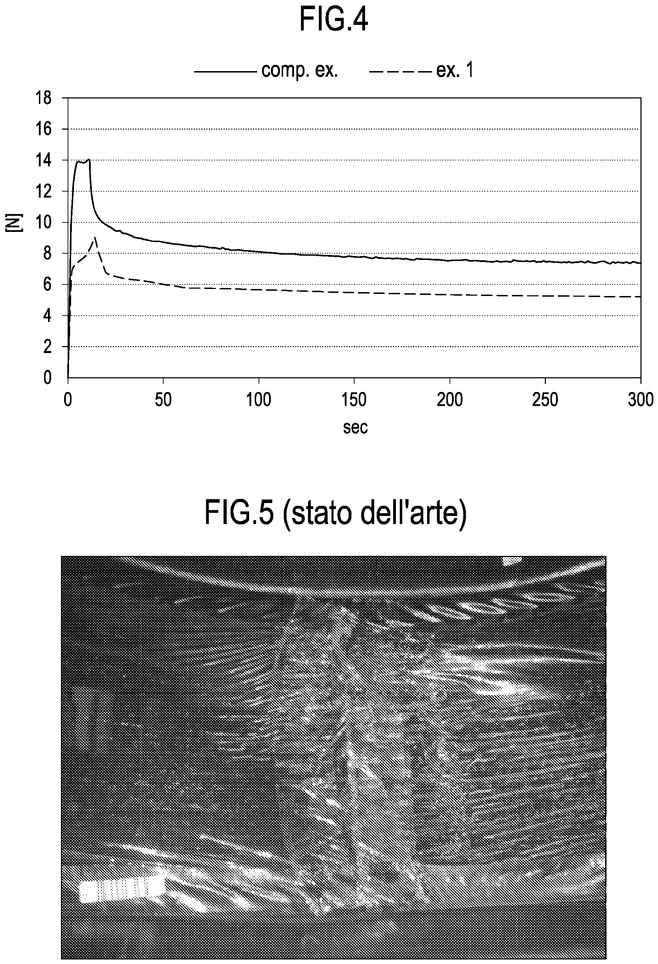

From the data reported in table 2, it is inferred that the three above-considered films are deformed (5% elongation deformation) only with very high forces, between 50 N and 144 N (7.2 N/cm * 20 cm of width). The forces detected for 5% elongation of the test piece are indicative of the forces necessary for inducing smaller deformations, shown in figure 4 by the initial slope of the curve. Even if the polyolefin films A and B are less rigid than the polyamide C, such lower rigidity does not negatively affect the behaviour.

### Test for evaluating the residual force

A comparative test was also executed by comparing residual force on two samples of self-supporting film (200 mm x 20 mm, cut in longitudinal direction with respect to the extension of the film reel and preloaded to 0.4 N), the first made of polyolefin according to the invention (film B with 25 micron nominal thickness) and the second the comparative sample made of polyamide C (Filmon CXS18, with 18 micron nominal thickness). The test piece was conditioned for 24 hours at 23 °C and 45% relative humidity.

The test was executed by means of dynamometer Zwic model 1445, the force values encountered in the test, which led to an elongation up to 50% at the speed of 500 mm/sec and the subsequent maintenance of such deformation for overall 5 minutes, are reported in figure 4.

With the sample made of polyolefin according to the invention (example 1), the residual force exerted in the step of maintaining the deformation after traction is always less than that of the sample made of polyamide (comparative example), notwithstanding the greater thickness of the test piece according to the invention, and it settles on values below 6 N (i.e. less than 3 N/cm of width, that is less than 12 MPa) while for the test piece made of polyamide values greater than 7.2 N are observed (i.e. greater than 3.6 N/cm and 20 MPa).

Notwithstanding a moderate reduction of the residual force of the film made of polyolefin with respect to that made of polyamide, there is a considerable improvement of the stability over time of the green tyre, and in particular of the joint of the semifinished product, which passes from several hours (after 16 hours the semifinished products with polyamide film have extensive detachments at the joint and at the elongated elements) to a time greater than 48 h (with polyolefin films, no significant openings of the joint were observed, nor was any separation observed at the elongated elements for at least 2-3 days).

### Sealing composition

The sealing composition of the following table 3, according to the patent application WO2009143895, was used for the preparation of the sealing layer.

**TABLE 3**

| Components | phr |
|---|---|
| IR | 60 |
| SBR 1502 | 30 |
| SBR 1009 | 10 |
| Luperox 101 XL45 | 0.56 |
| Process oil | 45 |
| 6-PPD | 2 |
| Escorez® 1102 | 40 |
| Struktol® 40MS | 7 |
| N326 | 12 |

| | |
|---|---|
| IR is a cis-1,4-polyisoprene elastomer produced by Nizhnekamskneftechim Export, Russia; SBR 1502 is a styrene-butadiene elastomeric copolymer produced by Lanxess and sold as Buna SE 1502 SBR 1009 is a butadiene-styrene pre-cross-linked elastomeric copolymer produced with a process of polymerisation under hot emulsion by Lion Polymers; Luperox 101 XL45 is a peroxide produced by Arkema Process oil is (MES - mild extraction solvates) mineral-based oil that is highly refined with solvent and/or via hydrotreatment (Catenex SNR produced by Shell); Escorez® 1102 is an aliphatic bonding resin produced by ExxonMobil; 6-PPD is N-(1,3-Dimethylbutyl)-N'-phenyl-p-phenylenediamine, antioxidant and antiozonant produced by Eastman; Struktol® 40MS is a mixture of aromatic aliphatic-napthenic hydrocarbon resins (Struktol Corporation); N326 is carbon black produced by Birla. | |

### Dynamic properties

The dynamic properties of the sealing composition were measured with a rheometer RPA 2000 by Alpha Technologies. The samples were placed in a chamber between two striated biconical plates. After closure, the volume of the chamber is about 4.5 cm³. One of the plates is fixed, the other in sinusoidal oscillation around its centre. A deformation of 20% was set and a frequency scan between 0.1 and 20 Hz carried out. The temperature inside the chamber was set at 60 °C. The quantities evaluated were the dynamic shear modulus G * and the tan delta loss factor, wherein:
G * = root sum of the squares of G' and G", dynamic shear modulus in MPa;
G': elastic dynamic shear modulus in MPa;
G": viscous dynamic shear modulus in MPa;
Delta (D)= displacement between the set deformation and the measured stress;
Tan delta = G" / G'
The sealing compositions according to the invention showed (at 10 Hz and at 60°C, 10% deformation) a value of G* equal to 0.07 and a tan delta of 0.35.

### Preparation of self-sealing tyres

The sealing composition layer, before building the tyre, had a thickness of about 4.8 mm and the sealing composite was deposited in radially inner position on the liner (as illustrated in Fig. 1).

The moulded and vulcanised tyres were mounted on a standard rim and inflated to the pressure of 2.4 bar.

### Example 1

The sealing composition according to the formulation of table 3 was used for preparing, via extrusion, two sealing composites with thickness of about 5 mm, comprising a removable film made of siliconised polyester, 25 x 1 mm lateral elongated elements made of rubber and, respectively, according to the invention, the self-supporting film made of polyolefins (film B) with 25 micron nominal thickness, and the self-supporting film made of Nylon (C) with 18 micron nominal thickness for comparison.

The two composites were used for preparing self-sealing tyres of size 215/60R16 comprising a sealing composite with thickness of about 3 mm comprising a sealing composition as in table 3, together with a self-supporting thermoplastic film made of polyolefins (film B, invention) and self-sealing tyres of size 215/60R16 comprising a sealing composite with thickness of about 3 mm, with the same composition but comprising a self-supporting film made of polyamide (C).

### Dynamic sealing test under cold conditions

The sealing capacity in low temperature conditions was verified according to the following procedure:
1) Through the tread of the above-described self-sealing tyres 215/60R16, mounted on standard rims and inflated to the pressure of 2.4 bar, 3 nails of 3, 4 and 5 mm diameter were inserted, having length of 40 mm, for a total of 9 nails per tyre (3 for each diameter). The zone of the tread to be perforated corresponded with the belts. The arrangement of the nails comprised blocks and notches and it was circumferentially random.
2) A VW Tiguan car was equipped with 4 self-sealing tyres 215/60R16 according to the invention, each perforated with 3 nails for each diameter as described above, while a second car VW Tiguan was equipped with 4 self-sealing tyres 215/60R16 with sealing composite comprising a self-supporting film made of aliphatic polyamide (Nylon), perforated in the manner.
3) 1000 km were travelled on roads, mostly snowy, at the maximum speed of 120 km/h in environmental temperature conditions between -10°C and -1 °C. The tyres did not lose air for the entire period of the test.
4) The tyres were dismounted from the cars and placed in a climatic chamber at -25°C for 24 h.
5) The tyres were removed from the climatic chamber and the nails were extracted while the tyres were still very cold and the loss of air was controlled with a solution of soapy water. The obtained results are summarised in the following table 4a, in the form of percentage of holes sealed (e.g. 83% signifies that 10 holes out of 12 total were sealed)

**TABLE 4a:**

| 1000 km travel with nails, 24 hours at-25°C, extraction | | | | | |
|---|---|---|---|---|---|
| Tyre size | Test temperature | Film | Percentage of holes sealed (hole diameter) | | |
| | | | (3 mm) | (4 mm) | (5 mm) |
| 215/60 R16 | -25°C | Nylon - comparison | 83% | 83% | 58% |
| 215/60 R16 | -25°C | Polyolefin - invention | 100% | 100% | 75% |

6) The cars were equipped with the tyres from which the nails were removed, the tyres were re-inflated and another 300 km were travelled at the maximum speed of 120 km/h in environmental conditions between -10°C and -1 °C. The air loss from the holes was further controlled with a solution of soapy water. The obtained results are summarised in the following table 4b, in the form of percentage of holes sealed:

**TABLE 4b:**

| 1000 Km travel with nails, extraction, inflation, 300 km travel without nails | | | | |
|---|---|---|---|---|
| Size | Film | Percentage of holes sealed (hole diameter) | | |
| | | (3 mm) | (4 mm) | (5 mm) |
| 215/60 R16 | Nylon - comparison | 100% | 100% | 92% |
| 215/60 R16 | Polyolefin - invention | 100% | 100% | 100% |

From the data of the tables 4a and 4b, it is indicated that a tyre according to the present invention, given the same composition and thickness of the sealing composition of the sealing composite, has a greater sealing capacity at low temperatures with respect to a tyre equipped with self-supporting film made of aliphatic polyamide (Nylon).

### Recycling of the semifinished product

In the experience of the Applicant, it has been technically difficult and onerous to recycle the strip-like semifinished product comprising the sealing composition, the self-supporting film and preferably the lateral elongated elements (hence lacking the second removable protective film), when the support film has polyamide base. Indeed, it was found that pieces of film of size between several mm² and a few cm² pollute the resulting composition, not allowing the correct extrusion thereof. The removal of these polyamide fragments by filtration has proven very difficult and little effective.

The present thermoplastic film made of polyolefin allows an easy recycling of the semifinished product. It is observed that, by introducing in the formulation of the sealing composition an aliquot of sealing composite (comprising the sealing composition, the self-supporting polyolefin film and the elongated elements, but lacking the second removable protective film) equal to about 10-20% by weight with respect to the original formulation, one obtains a composition that is not polluted by macroscopic film fragments - subjecting it to filtration through two steel meshes with 18 mesh density (opening of 0.88 mm2) mounted at 45°, no material was found to be retained - and that has sealing performances comparable to those of the original composition.

### Example 2

The sealing composite according to the invention to be recycled, constituted by the thermoplastic film made of polyolefins (film B) with 25 micron nominal thickness, by the sealing composition (as in table 3, thickness 4.8 mm) and by 25 x 1 mm lateral elongated elements made of rubber, was added in a Banbury in a quantity of 25 phr (about 10% with respect to the finished composition) to the Master composition constituted by the polymers, by the carbon black CB, and by the 6-PPD and by the Struktol 40MS; the resulting masterbatch was then used for preparing a sealing composition according to the overall recipe reported in the following table 5. Analogously, a comparative sealing composition was prepared comprising a recycled sealing composite with film with polyamide base (C), according to the final recipe reported in Table 5:

**TABLE 5**

| | Composition with recycled polyolefin film, 25 µm (phr) (INVENTION) | Composition with recycled Nylon film, 18 µm (phr) (COMPARISON) |
|---|---|---|
| IR | 60 | 60 |
| SBR 1502 | 30 | 30 |
| SBR 1009 | 10 | 10 |
| Recycled composite (Nylon) | - | 25 |
| Recycled composite (PO) | 25 | - |
| N 326 | 12 | 12 |
| 6-PPD | 2 | 2 |
| Struktol 40MS | 7 | 7 |
| MES | 45 | 45 |
| Escorez® 1102 | 40 | 40 |
| Luperox 101 XL45 | 0.65 | 0.65 |

| | | |
|---|---|---|
| Key: IR is a cis-1,4-polyisoprene elastomer produced by Nizhnekamskneftechim Export, Russia; SBR 1502 is a styrene-butadiene elastomeric copolymer produced by Lanxess and sold as Buna SE 1502 SBR 1009 is a butadiene-styrene pre-cross-linked elastomeric copolymer produced with a process of polymerisation under hot emulsion by Lion Polymers; Luperox 101 XL45 is a peroxide produced by Arkema; N326 is carbon black; 6-PPD is N-(1,3-Dimethylbutyl)-N'-phenyl-p-phenylenediamine, antioxidant and antiozonant produced by Eastman; Struktol® 40MS is a mixture of aromatic aliphatic-napthenic hydrocarbon resins (Struktol Corporation); Process oil is (MES - mild extraction solvates) mineral-based oil that is highly refined with solvent and/or for hydrotreatment (Catenex SNR produced by Shell); Escorez® 1102 is an aliphatic bonding resin produced by ExxonMobil. | | |

The two sealing compositions were used for preparing two strip-like sealing composites with thickness of 4.8 mm, respectively comprising a self-supporting film made of polyolefins (film B) with 25 micron nominal thickness, according to the invention, and a self-supporting film made of Nylon with 18 micron (C) for comparison and lateral elongated elements made of rubber. The two semifinished products were used for the preparation of self-sealing tyres of size 215/55 R17, which showed the dynamic sealing performance reported in tables 6a and 6b.

### Dynamic sealing test with sealing materials comprising recycled materials

1) Nails with 3, 4, 5 mm diameter, having 40 mm length, were inserted in the tread of a self-sealing tyre according to the invention (film B made of polyolefins with 25 micron nominal thickness and about 3 mm of sealing composition) and of a tyre comprising a self-supporting film made of polyamide, Filmon CXS18, 18 micron nominal thickness (C) and about 3 mm of sealing composition) inflated to the pressure of 2.4 bar. For both tyres, the sealing composition was obtained by using 25 phr (about 10% by weight) of recycled material of the semifinished product with the elongated elements and the respective film, as described above in Table 5.
The zone of the tread to be perforated corresponded with the belts. The arrangement of the nails comprised blocks and grooves and it was circumferentially random. 12 nails were inserted for each of the 3 selected sizes (3, 4 and 5 mm diameter per 4 cm length) in each tyre.
The tyres were rolled, with the nails inserted, on a so-called "road wheel", a disc with 2.8 m diameter, at the speed of 120 k m/h with a load of 550 kg.
2) 500 km were travelled with the two tyres, alternating periods of 10 minutes with zero slip angle with periods of 10 minutes with slip angle oscillating from -6° to +6°. The slip speed was 1°/s: for each slip cycle, 25 oscillations were completed.
The tyres did not lose air for the entire testing period.
3) The inserted nails were extracted and the air loss from the holes was controlled with a solution of soapy water. The obtained results are summarised in the following table 6a

**TABLE 6:**

| 500 km of travel with nails | | | | | |
|---|---|---|---|---|---|
| Tyre size | Sealing composition | Film | Percentage of holes sealed (hole diameter) | | |
| | | | (3 mm) | (4 mm) | (5 mm) |
| 215/55R17 | Comparative composition Table 5, 10% recycled | C-Nylon Filmon CXS18 - comparison | 100% | 83% | 92% |
| 215/55R17 | Invention composition Table 5, 10% recycled | B-Polyolefins invention | 100% | 100% | 92% |

4) Another 10 km were travelled with 550 kg of load and slip angle oscillating from -2° to +2°. The air loss from the holes was further controlled with a solution of soapy water. The obtained results are summarised in the following table 6b

**TABLE 6b:**

| 500 km of travel with nails, extraction, 10 km travel without nails | | | | | |
|---|---|---|---|---|---|
| Tyre size | Sealing composition | Film | Percentage of holes sealed (hole diameter) | | |
| | | | (3 mm) | (4 mm) | (5 mm) |
| 215/55R17 | Comparative composition Table 510% recycled | C-Nylon Filmon CXS18 - comparison | 100% | 83% | 92% |
| 215/55R17 | Invention composition Table 5 10% recycled | B-Polyolefins invention | 100% | 100% | 100% |

From the data reported in table 6a and 6b, it is indicated that even in a recycled condition of the sealing composite, the tyre according to the present invention has a greater sealing capacity.

### Visual evaluation test for the perforations

The two tyres subjected to the above-described dynamic test, of the same size and structure, except for the self-supporting film, were subjected to observation of the radially more internal surface, in order to verify if and how many perforations were easily identifiable by visual inspection.

In a visual test, three observers provided the following evaluations:

**TABLE 7: holes detected over 36 present**

| | Tyre of the invention (polyolefin film) | Comparative tyre (polyamide film) |
|---|---|---|
| Observer A | 35 (97%) | 12 (33%) |
| Observer B | 36 (100%) | 18 (50%) |
| Observer C | 32 (89%) | 22 (61%) |

The self-sealing tyre of the invention was equipped with sealing composite with self-supporting polyolefin film (B) while the comparative tyre with polyamide film (C) (Filmon CXS18).

The photographs of Figures 6a and 6b frame corresponding portions, which contain the same perforations, of the two tyres 215/55R17 for the purpose of the above-described test: it is clear that the holes are decidedly more evident in the tyre of the invention.

The collected data allow concluding that a self-sealing tyre according to the present invention allows detecting the perforations present by simple visual inspection much more effectively than what occurs for known self-sealing tyres.

## Claims

1. A green or at least partially vulcanised tyre comprising at least:
a carcass structure (2), a tread band (7) applied in radially outer position to said carcass structure (2), optionally a layer of elastomeric material substantially impermeable to air, liner (9), applied in radially inner position to said carcass structure (2), a sealing composite (12) applied to the radially more internal surface of said tyre axially extended at least at a crown portion of the tyre;
wherein said sealing composite (12) is according to claim 14 and comprises at least a self-supporting thermoplastic film (11) and
a sealing composition layer (10) associated with and supported by said self-supporting thermoplastic film (11) and wherein the sealing composition layer (10) is placed substantially in contact with the radially more internal surface of the tyre and the self-supporting thermoplastic film (11) is radially inside the sealing composition layer (10),
wherein the self-supporting thermoplastic film (11) comprises at least 50% by weight with respect to the weight of the film itself of at least one or more polyolefins, wherein the at least one polyolefin has a fluidity index (MFI) less than 4, preferably less than 2, more preferably less than 1.5, still more preferably less than 1 gram per 10 minutes evaluated according to ASTM D1238 at 190°C/2.16 Kg..

2. The tyre according to claim 1 wherein said at least one polyolefin has a fluidity index (MFI) greater than 0.1, more preferably greater than 0.2 grams per 10 minutes evaluated according to ASTM D1238 at 190°C/2.16 Kg.

3. The tyre according to claim 1 or 2 wherein the at least one or more polyolefins in the mixture of the self-supporting thermoplastic film has a melting point less than 160°C, 150°C, preferably less than 140°C or 130°C or 120°C.

4. The tyre according to any one of the preceding claims wherein said self-supporting thermoplastic film comprises at least 50%, 60%, 70%, 80% or 90% or more than 90%, 95% or 98% by weight with respect to the weight of the film itself of said at least one or more polyolefins and/or from 1 to 50%, preferably from 10 to 40%, more preferably from 15 to 35% by weight of one or more polar polymers selected from among polyvinyl acetate, ethylene-vinyl acetate copolymers, EVOH, polyvinyl acetate with a high level of hydrolysis, polyvinyl alcohol (PVA, PVOH) or mixtures thereof.

5. The tyre according to any one of the preceding claims wherein the at least one polyolefin of said self-supporting thermoplastic film is selected from among homopolymers and copolymers of ethylene, of propylene, of C4-C20 alpha-olefin and mixtures thereof, preferably it is a polyethylene selected from among homopolymers of ethylene, copolymers of ethylene with propylene, copolymers of ethylene with a C4-C8 alpha-olefin and copolymers of ethylene with vinyl acetate and mixtures thereof.

6. The tyre according to claim 5 wherein the at least one polyolefin is a polyethylene (PE), preferably selected from among linear low-density polyethylene (LLDPE), low-density polyethylene (LDPE), low-density polyethylene copolymerised with vinyl acetate (LDPE-EVA), medium-density polyethylene (MDPE) or mixtures thereof and/or a PE having a melting temperature less than 135°C.

7. The tyre according to any one of the preceding claims wherein said self-supporting thermoplastic film has one or more of the following parameters:
a) a load for elongation at break greater than 15 MPa, preferably greater than 20 MPa and/or a load for 5% elongation greater than 6 MPa, preferably greater than 8 MPa, more preferably comprised between 9 and 16 MPa, evaluated according to ASTM D882 on a sample with 12.57 mm width deformed at the speed of 500 mm/min at 23°C;
b) an elongation at break (AR) greater than 100% in the longitudinal direction, preferably greater than 150%, more preferably equal to or greater than 200%, evaluated according to ASTM D882 on a sample with 12.57 mm width deformed at the speed of 500 mm/min at 23°C;
c) a residual elastic force per linear centimetre of width of the film, about 5 minutes after reaching 50% deformation, that is generally less than 3.6 N/cm, preferably less than 3.0 N/cm, more preferably less than 2.8 N/cm, preferably comprised between 2.75 and 1.75 N/cm.

8. The tyre according to any one of the preceding claims, wherein said self-supporting thermoplastic film, before shaping, has a thickness less than 100 µm, preferably less than 50 µm, more preferably less than 40 µm or 30 µm.

9. The tyre according to any one of the claims 1 to 7 wherein the sealing composition has a dynamic modulus value G* measured at 10 Hz and at 60°C that is greater than 0.03 MPa, preferably greater than 0.04 MPa, still more preferably greater than 0.06 MPa

10. The tyre according to any one of the preceding claims, wherein said sealing composition layer, before shaping, has a thickness less than 8 mm, preferably less than 7 mm, more preferably less than 6 mm.

11. The tyre according to any one of the preceding claims wherein the sealing composition comprises one or more plasticisers in an overall quantity of less than 200 phr, more preferably less than 100 phr, still more preferably less than 80 phr.

12. A self-sealing tyre for vehicle wheels obtained by vulcanisation of a green or partially vulcanised tyre according to any one of the claims 1 to 11.

13. Process for producing a self-sealing tyre for vehicle wheels according to claim 12, comprising:
a) forming, on a forming drum, a green tyre comprising a carcass structure (2), a tread band (7) applied in radially outer position to said carcass structure (2), optionally a layer of elastomeric material substantially impermeable to air (liner) (9) applied in radially inner position to said carcass structure (2), a sealing composite (12) applied to the radially more internal surface of said tyre, axially extended at least at a crown portion of the tyre,
b) arranging an expandable vulcanisation chamber;
c) expanding said expandable vulcanisation chamber within said green tyre in a manner so as to shape, mould and vulcanise the green tyre and to obtain a finished self-sealing tyre,
wherein said sealing composite (12) comprises
a self-supporting thermoplastic film (11) and a sealing composition layer (10) associated with and supported by said self-supporting thermoplastic film (11);
wherein the self-supporting thermoplastic film (11) is radially inside the sealing composition layer (10) and said sealing composition layer (10) is placed substantially in contact with the radially more internal surface of said tyre
wherein said self-supporting thermoplastic film (11) comprises at least 50% by weight with respect to the weight of the film itself of at least one or more polyolefins, wherein the at least one polyolefin has a fluidity index (MFI) less than 4, preferably less than 2, more preferably less than 1.5, still more preferably less than 1 gram per 10 minutes evaluated according to ASTM D1238 at 190°C/2.16 Kg,

14. A sealing composite (12) for tyres comprising at least
a self-supporting thermoplastic film (11) and
a sealing composition layer (10) associated with and supported by said self-supporting thermoplastic film (11), **characterized in that**
said self-supporting thermoplastic film (11) comprises at least 50% by weight with respect to the weight of the film itself of at least one or more polyolefins, wherein the at least one polyolefin has a fluidity index (MFI) less than 4, preferably less than 2, more preferably less than 1.5, still more preferably less than 1 gram per 10 minutes evaluated according to ASTM D1238 at 190°C/2.16 Kg.

15. A sealing composite according to claim 14 wherein
- said self-supporting thermoplastic film also comprises from 1 to 50%, preferably from 10 to 40%, more preferably from 15 to 35% by weight of one or more polar polymers selected from among polyvinyl acetate, ethylene-vinyl acetate copolymers, EVOH, polyvinyl acetate with a high level of hydrolysis, polyvinyl alcohol (PVA, PVOH) or mixtures thereof; and/or
- said self-supporting thermoplastic film comprises at least 50%, 60%, 70%, 80%, 90% of a polyethylene having a fluidity index (MFI) less than 4.0, preferably less than 2.0, more preferably less than 1.5, still more preferably less than 1 gram per 10 minutes according to ASTM D1238, 190°C/2.16 Kg, and/or
- said sealing composition comprises one or more plasticisers in an overall quantity of less than 200 phr, more preferably less than 100 phr, still more preferably less than 80 phr; and/or
- said sealing composition has a dynamic modulus value G* measured at 10 Hz and at 60°C greater than 0.03 MPa, more preferably greater than 0.04 MPa, still more preferably greater than 0.06 MPa.

## Patentansprüche

1. Roher oder zumindest teilweise vulkanisierter Reifen, umfassend zumindest:
eine Karkassenstruktur (2), einen Laufflächenring (7), der in Bezug auf die Karkassenstruktur (2) in einer radial äußeren Position aufgebracht ist, optional eine Lage Elastomermaterial, die im Wesentlichen luftundurchlässig ist, eine Auskleidung (9), die in einer radial inneren Position auf die Karkassenstruktur (2) aufgebracht ist, einen Dichtungsverbundstoff (12), der auf die radial weiter innenliegende Oberfläche des Reifens sich axial zumindest an einem Zenithabschnitt des Reifens erstreckend aufgebracht ist;
wobei der Dichtungsverbundstoff (12) einer nach Anspruch 14 ist und zumindest eine selbsttragende Thermoplastfolie (11) und
eine Lage einer Dichtungszusammensetzung (10) umfasst, die der selbsttragenden thermoplastischen Folie (11) zugeordnet ist und von dieser getragen wird, und wobei die Lage der Dichtungszusammensetzung (10) im Wesentlichen in Kontakt mit der radial weiter innen liegenden Oberfläche des Reifens steht und die selbsttragende thermoplastische Folie (11) sich von der Lage der Dichtungszusammensetzung (10) aus radial innen befindet.
wobei
die selbsttragende thermoplastische Folie (11) zumindest 50 Gew.-% in Bezug auf das Gewicht der Folie selbst eines oder mehrerer Polyolefine umfasst, wobei die Polyolefine eine Schmelze-Massefließrate (MFR) von weniger als 4, vorzugsweise weniger als 2, noch bevorzugter weniger als 1,5, sogar noch bevorzugter weniger als 1 Gramm pro 10 Minuten aufweisen, evaluiert nach ASTM D1238 bei 190 °C/2,16 kg.

2. Reifen nach Anspruch 1 wobei das zumindest eine Polyolefin eine Schmelze-Massefließrate (MFR) von mehr als 0,1, noch bevorzugter mehr als 0,2 Gramm pro 10 Minuten aufweist, evaluiert nach ASTM D1238 bei 190 °C/2,16 kg.

3. Reifen nach Anspruch 1 oder 2, wobei das zumindest eine oder die mehreren Polyolefine in der Mischung der selbsttragenden thermoplastischen Folie einen Schmelzpunkt von weniger als 160 °C, 150 °C, vorzugsweise weniger als 140 °C oder 130 °C oder 120 °C aufweisen.

4. Reifen nach einem der vorhergehenden Ansprüche, wobei die selbsttragende thermoplastische Folie zumindest 50 %, 60 %, 70 %, 80 % oder 90 % oder mehr als 90 %, 95 % oder 98 % nach Gewicht, in Bezug auf das Gewicht der Folie selbst, des zumindest einen oder der mehreren Polyolefine, und/oder von 1 bis 50 %, vorzugsweise von 10 bis 40 %, noch bevorzugter von 15 bis 35 % nach Gewicht eines oder mehrerer polarer Polymere umfasst, die aus Polyvinylacetat, Ethylen-Vinylacetat-Copolymeren, EVOH, hochverseiftem Polyvinylacetat, Polyvinylalkohol (PVA, PVOH) oder Mischungen davon ausgewählt sind.

5. Reifen nach einem der vorhergehenden Ansprüche, wobei das zumindest eine Polyolefin der selbsttragenden thermoplastischen Folie aus Homopolymeren und Copolymeren von Ethylen, Propylen, C4-C20-alpha-0lefin und Mischungen davon ausgewählt ist, wobei es vorzugsweise ein Polyethylen ausgewählt aus Homopolymeren von Ethylen, Copolymeren von Ethylen mit Propylen, Copolymeren von Ethylen mit einem C4-C8-alpha-0lefin und Copolymeren von Ethylen mit Vinylacetat und Mischungen davon ist.

6. Reifen nach Anspruch 5, wobei das zumindest eine Polyolefin ein Polyethylen (PE) ist, vorzugsweise ausgewählt aus linearem Polyethylen niedriger Dichte (LLDPE), Polyethylen niedriger Dichte (LDPE), Polyethylen niedriger Dichte copolymerisiert mit Vinylacetat (LDPE-EVA), Polyethylen mittlerer Dichte (MDPE) oder Mischungen davon und/oder einem PE mit einer Schmelztemperatur von weniger als 135 °C.

7. Reifen nach einem der vorhergehenden Ansprüche, wobei die selbsttragende thermoplastische Folie einen oder mehrere der folgenden Parameter aufweist:
a) eine Bruchdehnungslast von mehr als 15 MPa, vorzugsweise mehr als 20 MPa und/oder eine Last für eine Dehnung über 5 % von mehr als 6 MPa, vorzugsweise mehr als 8 MPa, noch bevorzugter zwischen 9 und 16 MPa, evaluiert nach ASTM D882 an einer Probe mit 12,57 mm Breite, verformt bei einer Geschwindigkeit von 500 mm/min bei 23 °C;
b) eine Bruchdehnung (AR) von mehr als 100 % in der Längsrichtung, vorzugsweise mehr als 150 %, noch bevorzugter gleich oder mehr als 200 %, evaluiert nach ASTM D882 an einer Probe mit 12,57 mm Breite, verformt bei einer Geschwindigkeit von 500 mm/min at 23 °C;
c) eine elastische Restkraft pro Linearzentimeter Breite der Folie, etwa 5 Minuten nach Erreichen von 50 % Verformung, die im Allgemeinen kleiner als 3,6 N/cm ist, vorzugsweise kleiner als 3,0 N/cm, noch bevorzugter kleiner als 2,8 N/cm, vorzugsweise zwischen 2,75 und 1,75 N/cm beträgt.

8. Reifen nach einem der vorhergehenden Ansprüche, wobei die selbsttragende thermoplastische Folie vor der Formung eine Dicke von weniger als 100 pm, vorzugsweise weniger als 50 pm, noch bevorzugter weniger als 40 pm oder 30 pm aufweist.

9. Reifen nach einem der Ansprüche 1 bis 7, wobei die Dichtungszusammensetzung einen dynamischen Modul-Wert G*, gemessen bei 10 Hz und bei 60 °C, aufweist, der höher als 0,03 MPa ist, vorzugsweise höher als 0,04 MPa, sogar noch bevorzugter höher als 0,06 Mpa.

10. Reifen nach einem der vorhergehenden Ansprüche, wobei die Lage der Dichtungszusammensetzung vor der Formung eine Dicke von weniger als 8 mm, vorzugsweise weniger als 7 mm, noch bevorzugter weniger als 6 mm aufweist.

11. Reifen nach einem der vorhergehenden Ansprüche, wobei die Dichtungszusammensetzung einen oder mehrere Weichmacher in einer Gesamtmenge von weniger als 200 phr, noch bevorzugter weniger als 100 phr, sogar noch bevorzugter weniger als 80 phr umfasst.

12. Selbstdichtender Reifen für Fahrzeugräder, der durch Vulkanisieren eines rohen oder teilweise vulkanisierten Reifens nach einem der Ansprüche 1 bis 11 erhalten wird.

13. Verfahren zur Herstellung eines selbstdichtenden Reifens für Fahrzeugräder nach Anspruch 12, wobei das Verfahren umfasst:
a) Bilden eines Rohreifens an einer Formungstrommel, wobei der Reifen umfasst: eine Karkassenstruktur (2), einen Laufflächenring (7), der in Bezug auf die Karkassenstruktur (2) in einer radial äußeren Position angelegt ist, optional eine Lage (9) Elastomermaterial, die im Wesentlichen luftundurchlässig ist (Auskleidung), die in einer radial inneren Position auf die Karkassenstruktur (2) aufgebracht ist, einen Dichtungsverbundstoff (12), der auf die radial weiter innenliegende Oberfläche des Reifens sich axial zumindest an einem Zenithabschnitt des Reifens erstreckend aufgebracht ist,
b) Anordnen einer expandierbaren Vulkanisationskammer;
c) Expandieren der expandierbaren Vulkanisationskammer innerhalb des Rohreifens auf eine Weise, um den Rohreifen zuzurichten, zu formen und zu vulkanisieren, und einen fertigen selbstdichtenden Reifen zu erhalten,
wobei der Dichtungsverbundstoff (12) eine selbsttragende thermoplastische Folie (11) und eine Lage einer Dichtungszusammensetzung (10) umfasst, die der selbsttragenden thermoplastischen Folie (11) zugeordnet ist und von dieser getragen wird;
wobei die selbsttragende thermoplastische Folie (11) sich von der Lage der Dichtungszusammensetzung (10) aus radial innen befindet, und die Lage der Dichtungszusammensetzung (10) im Wesentlichen in Kontakt mit der radial weiter innen liegenden Oberfläche des Reifens platziert wird,
wobei
die selbsttragende thermoplastische Folie (11) zumindest 50 Gew.-% in Bezug auf das Gewicht der Folie selbst eines oder mehrerer Polyolefine umfasst, wobei die Polyolefine eine Schmelze-Massefließrate (MFR) von weniger als 4, vorzugsweise weniger als 2, noch bevorzugter weniger als 1,5, sogar noch bevorzugter weniger als 1 Gramm pro 10 Minuten aufweisen, evaluiert nach ASTM D1238 bei 190 °C/2,16 kg.

14. Dichtungsverbundstoff (12) für Reifen, umfassend zumindest
eine selbsttragende thermoplastische Folie (11) und
eine Lage einer Dichtungszusammensetzung (10), die der selbsttragenden thermoplastischen Folie (11) zugeordnet ist und von dieser getragen wird;
**dadurch gekennzeichnet, dass**
die selbsttragende thermoplastische Folie (11) zumindest 50 Gew.-% in Bezug auf das Gewicht der Folie selbst eines oder mehrerer Polyolefine umfasst, wobei die Polyolefine eine Schmelze-Massefließrate (MFR) von weniger als 4, vorzugsweise weniger als 2, noch bevorzugter weniger als 1,5, sogar noch bevorzugter weniger als 1 Gramm pro 10 Minuten aufweisen, evaluiert nach ASTM D1238 bei 190 °C/2,16 kg.

15. Dichtungsverbundstoff nach Anspruch 14, wobei
- wobei die selbsttragende thermoplastische Folie auch von 1 bis 50 %, vorzugsweise von 10 bis 40 %, noch bevorzugter von 15 bis 35 % nach Gewicht eines oder mehrerer polarer Polymere umfasst, die aus Polyvinylacetat, Ethylen-Vinylacetat-Copolymeren, EVOH, hochverseiftem Polyvinylacetat, Polyvinylalkohol (PVA, PVOH) oder Mischungen davon ausgewählt sind; und/oder
- wobei die selbsttragende thermoplastische Folie zumindest 50 %, 60 %, 70 %, 80 %, 90 % eines Polyethylens umfasst, das eine Schmelze-Massefließrate (MFR) von weniger als 4,0, vorzugsweise weniger als 2,0, noch bevorzugter weniger als 1,5, sogar noch bevorzugter weniger als 1 Gramm pro 10 Minuten gemäß ASTM D1238, 190 °C/2,16 kg aufweist, und/oder
- wobei die Dichtungszusammensetzung einen oder mehrere Weichmacher in einer Gesamtmenge von weniger als 200 phr, noch bevorzugter weniger als 100 phr, sogar noch bevorzugter weniger als 80 phr umfasst; und/oder
- wobei die Dichtungszusammensetzung einen dynamischen Modul-Wert G*, gemessen bei 10 Hz und bei 60 °C, aufweist, der höher als 0,03 MPa ist, vorzugsweise höher als 0,04 MPa, sogar noch bevorzugter höher als 0,06 MPa aufweist.

## Revendications

1. Pneu cru ou au moins partiellement vulcanisé comprenant au moins :
une structure de carcasse (2), une bande de roulement (7) appliquée dans une position radialement externe par rapport à ladite structure de carcasse (2), éventuellement une couche de matériau élastomère essentiellement imperméable à l'air, un calandrage intérieur (9), appliqué dans une position radialement interne par rapport à ladite structure de carcasse (2), un composite d'étanchéité (12) appliqué à la surface radialement la plus à l'intérieur dudit pneu s'étendant axialement au moins au niveau d'une partie de sommet du pneu ;
dans lequel ledit composite d'étanchéité (12) est selon la revendication 14 et comprend au moins
un film thermoplastique autoportant (11) et
une couche de composition d'étanchéité (10) associée audit film thermoplastique autoportant (11) et supportée par celui-ci
et où la couche de composition d'étanchéité (10) est placée essentiellement en contact avec la surface radialement la plus à l'intérieur du pneu et le film thermoplastique autoportant (11) est radialement à l'intérieur de la couche de composition d'étanchéité (10),
où
le film thermoplastique autoportant (11) comprend au moins 50% en poids par rapport au poids du film lui-même d'au moins une ou plusieurs polyoléfine(s), où l'au moins une polyoléfine a un indice de fluidité (MFI) inférieur à 4, de préférence inférieur à 2, plus préférablement inférieur à 1,5, encore plus préférablement inférieur à 1 gramme par 10 minutes, évalué selon la norme ASTM D1238 à 190°C/2,16 Kg.

2. Pneu selon la revendication 1, dans lequel ladite au moins une polyoléfine a un indice de fluidité (MFI) supérieur à 0,1, plus préférablement supérieur à 0,2 gramme par 10 minutes, évalué selon la norme ASTM D1238 à 190°C/2,16 kg.

3. Pneu selon la revendication 1 ou 2 dans lequel l'au moins une ou plusieurs polyoléfine(s) dans le mélange du film thermoplastique autoportant a un point de fusion inférieur à 160°C, 150°C, de préférence inférieur à 140°C ou 130°C ou 120°C.

4. Pneu selon l'une quelconque des revendications précédentes dans lequel ledit film thermoplastique autoportant comprend au moins 50%, 60%, 70%, 80% ou 90% ou plus de 90%, 95% ou 98% en poids par rapport au poids du film lui-même de ladite/desdites au moins une ou plusieurs polyoléfine(s) et/ou 1 à 50%, de préférence 10 à 40%, plus préférablement 15 à 35% en poids d'un ou de plusieurs polymère(s) polaire(s) choisi(s) parmi l'acétate de polyvinyle, des copolymères éthylène-acétate de vinyle, l'EVOH, l'acétate de polyvinyle à haut niveau d'hydrolyse, l'alcool polyvinylique (PVA, PVOH) ou leurs mélanges.

5. Pneu selon l'une quelconque des revendications précédentes, dans lequel l'au moins une polyoléfine dudit film thermoplastique autoportant est choisie parmi des homopolymères et des copolymères d'éthylène, de propylène, d'alpha-oléfine en C₄ à C₂₀ et leurs mélanges, de préférence il s'agit d'un polyéthylène choisi parmi des homopolymères d'éthylène, des copolymères d'éthylène avec le propylène, des copolymères d'éthylène avec une alpha-oléfine en C₄ à C₈ et des copolymères d'éthylène avec l'acétate de vinyle et leurs mélanges.

6. Pneu selon la revendication 5 dans lequel l'au moins une polyoléfine est un polyéthylène (PE), de préférence choisi parmi un polyéthylène basse densité linéaire (LLDPE), un polyéthylène basse densité (LDPE), un polyéthylène basse densité copolymérisé avec de l'acétate de vinyle (LDPE-EVA), un polyéthylène moyenne densité (MDPE) ou leurs mélanges et/ou un PE ayant une température de fusion inférieure à 135°C.

7. Pneu selon l'une quelconque des revendications précédentes, dans lequel ledit film thermoplastique autoportant a un ou plusieurs des paramètres suivants :
a) une charge pour un allongement à la rupture supérieure à 15 MPa, de préférence supérieure à 20 MPa et/ou une charge pour 5% d'allongement supérieure à 6 MPa, de préférence supérieure à 8 MPa, plus préférablement comprise entre 9 et 16 MPa, évaluée selon la norme ASTM D882 sur un échantillon de 12,57 mm de largeur déformé à la vitesse de 500 mm/min à 23°C ;
b) un allongement à la rupture (AR) supérieur à 100% dans la direction longitudinale, de préférence supérieur à 150%, plus préférablement supérieur ou égal à 200%, évalué selon la norme ASTM D882 sur un échantillon de 12,57 mm de largeur déformé à la vitesse de 500 mm/min à 23°C ;
c) une force élastique résiduelle par centimètre linéaire de largeur du film, environ 5 minutes après avoir atteint une déformation de 50%, qui est généralement inférieure à 3,6 N/cm, de préférence inférieure à 3,0 N/cm, plus préférablement inférieure à 2,8 N/cm, de préférence comprise entre 2,75 et 1,75 N/cm.

8. Pneu selon l'une quelconque des revendications précédentes, dans lequel ledit film thermoplastique autoportant, avant le galbage, a une épaisseur inférieure à 100 µm, de préférence inférieure à 50 µm, plus préférablement inférieure à 40 µm ou 30 µm.

9. Pneu selon l'une quelconque des revendications 1 à 7 dans lequel la composition d'étanchéité a une valeur de module dynamique G* mesurée à 10 Hz et à 60°C qui est supérieure à 0,03 MPa, de préférence supérieure à 0,04 MPa, encore plus préférablement supérieure à 0,06 MPa.

10. Pneu selon l'une quelconque des revendications précédentes, dans lequel ladite couche de composition d'étanchéité, avant le galbage, a une épaisseur inférieure à 8 mm, de préférence inférieure à 7 mm, plus préférablement inférieure à 6 mm.

11. Pneu selon l'une quelconque des revendications précédentes, dans lequel la composition d'étanchéité comprend un ou plusieurs plastifiant (s) en une quantité totale inférieure à 200 phr, plus préférablement inférieure à 100 phr, encore plus préférablement inférieure à 80 phr.

12. Pneu auto-obturant pour roues de véhicules obtenu par vulcanisation d'un pneu cru ou partiellement vulcanisé selon l'une quelconque des revendications 1 à 11.

13. Procédé de production d'un pneu auto-obturant pour roues de véhicule selon la revendication 12, comprenant le fait :
a) de former, sur un tambour de formation, un pneu cru comprenant une structure de carcasse (2), une bande de roulement (7) appliquée dans une position radialement externe par rapport à ladite structure de carcasse (2), éventuellement une couche de matériau élastomère essentiellement imperméable à l'air, un calandrage intérieur (9) appliqué dans une position radialement interne par rapport à ladite structure de carcasse (2), un composite d'étanchéité (12) appliqué à la surface radialement la plus à l'intérieur dudit pneu, s'étendant axialement au moins au niveau d'une partie de sommet du pneu ,
b) à agencer une chambre de vulcanisation dilatable ;
c) à dilater ladite chambre de vulcanisation dilatable à l'intérieur dudit pneu cru de manière à réaliser le galbage du pneu cru, le mouler et le vulcaniser et à obtenir un pneu auto-obturant fini,
dans lequel ledit composite d'étanchéité (12) comprend
un film thermoplastique autoportant (11) et une couche de composition d'étanchéité (10) associée audit film thermoplastique autoportant (11) et supportée par celui-ci ;
où le film thermoplastique autoportant (11) est radialement à l'intérieur de la couche de composition d'étanchéité (10) et ladite couche de composition d'étanchéité (10) est placée essentiellement en contact avec la surface radialement la plus à l'intérieur dudit pneu
où
ledit film thermoplastique autoportant (11) comprend au moins 50% en poids par rapport au poids du film lui-même d'au moins une ou plusieurs polyoléfine(s), où l'au moins une polyoléfine a un indice de fluidité (MFI) inférieur à 4, de préférence inférieur à 2, plus préférablement inférieur à 1,5, encore plus préférablement inférieur à 1 gramme par 10 minutes, évalué selon la norme ASTM D1238 à 190°C/2,16 Kg,

14. Composite d'étanchéité (12) pour pneus comprenant au moins
un film thermoplastique autoportant (11) et
une couche de composition d'étanchéité (10) associée audit film thermoplastique autoportant (11) et supportée par celui-ci ,
**caractérisé en ce que**
ledit film thermoplastique autoportant (11) comprend au moins 50% en poids par rapport au poids du film lui-même d'au moins une ou plusieurs polyoléfine(s), où l'au moins une polyoléfine a un indice de fluidité (MFI) inférieur à 4, de préférence inférieur à 2, plus préférablement inférieur à 1,5, encore plus préférablement inférieur à 1 gramme par 10 minutes, évalué selon la norme ASTM D1238 à 190°C/2,16 Kg.

15. Composite d'étanchéité selon la revendication 14, dans lequel
- ledit film thermoplastique autoportant comprend également 1 à 50%, de préférence 10 à 40%, plus préférablement 15 à 35% en poids d'un ou de plusieurs polymère(s) polaire(s) choisi(s) parmi l'acétate de polyvinyle, des copolymères éthylène-acétate de vinyle, l'EVOH, l'acétate de polyvinyle à haut niveau d'hydrolyse, l'alcool polyvinylique (PVA, PVOH) ou leurs mélanges ; et/ou
- ledit film thermoplastique autoportant comprend au moins 50%, 60%, 70%, 80%, 90% d'un polyéthylène ayant un indice de fluidité (MFI) inférieur à 4,0, de préférence inférieur à 2,0, plus préférablement inférieur à 1,5, encore plus préférablement inférieur à 1 gramme par 10 minutes selon la norme ASTM D1238, à 190°C/2,16 kg, et/ou
- ladite composition d'étanchéité comprend un ou plusieurs plastifiant(s) en une quantité totale inférieure à 200 phr, plus préférablement inférieure à 100 phr, encore plus préférablement inférieure à 80 phr ; et/ou
- ladite composition d'étanchéité a une valeur de module dynamique G* mesurée à 10 Hz et à 60°C supérieure à 0,03 MPa, plus préférablement supérieure à 0,04 MPa, encore plus préférablement supérieure à 0,06 MPa.
